# EUROPEAN PATENT SPECIFICATION

(11) **EP 4 538 783 B1**
(45) Date of publication and mention of the grant of the patent: **25.11.2026**
(21) Application number: 23820112.3
(22) Date of filing: 08.06.2023
(51) Int. Cl.: G02F 1/1339, G02B 5/30, G02F 1/137, G02F 1/1333, G02F 1/1335, G02F 1/1337

(54) **OPTICAL DEVICE**
OPTISCHE VORRICHTUNG
DISPOSITIF OPTIQUE

(30) Priority: 10.06.2022 KR 20220070893
(43) Date of publication of application: 16.04.2025
(73) Proprietor: LG Chem, Ltd., Seoul 07336 (KR)
(72) Inventor: KIM, Jung Woon, Daejeon 34122 (KR); YOU, Jung Sun, Daejeon 34122 (KR); GIM, Min Jun, Daejeon 34122 (KR); LEE, Beom Jin, Daejeon 34122 (KR); OH, Dong Hyun, Daejeon 34122 (KR); KIM, Jin Hong, Daejeon 34122 (KR); MOON, Chan Sik, Daejeon 34122 (KR)
(74) Representative: Goddar, Heinz J.
(86) International application number: PCT/KR2023/007860
(87) International publication number: WO 2023/239177

(56) References cited:
- EP-B1- 3 617 777
- CN-A- 103 137 022
- KR-A- 20180 034 056
- KR-A- 20180 034 056
- KR-A- 20180 052 810
- KR-A- 20200 044 473
- KR-A- 20200 119 340
- KR-A- 20220 007 333
- KR-B1- 102 379 907

## Description

### [Technical Field]

The present application relates to an optical device.

The present application claims the benefit of priority based on Korean Patent Application No. 10-2022-0070893 dated June 10, 2022.

### [Background Art]

For long-term stability and large-area scalability of a liquid crystal film cell using flexible substrates, it is important that a cell gap is maintained between upper and lower substrates and adhesion force is imparted between the upper and lower substrates.

In Non-Patent Document 1 ("Tight Bonding of Two Plastic Substrates for Flexible LCDs" SID Symposium Digest, 38, pp. 653-656 (2007)), a technique for forming an organic film pattern in the form of a column or wall with a cell gap height on one substrate and fixing it to the opposite substrate using an adhesive is disclosed. However, in such a technique, the adhesive must be located only on the column surface or wall surface, but the technique of micro-stamping the adhesive on the column surface or wall surface has high process difficulty; the control of the adhesive thickness and area is difficult; upon lamination of the upper and lower substrates, there is a high probability that the adhesive will be pushed out; and there is a risk that the adhesive may be contaminated into the alignment film or liquid crystal.

KR 10-2022-0007333 discloses an optical device including a liquid crystal cell which includes a first substrate having an adhesive layer formed on a first surface, a liquid crystal layer, and a second substrate having a spacer and a liquid crystal alignment film formed on the first surface, wherein the first and second substrates are disposed to face each other so that their first surfaces face each other; a first outer substrate formed on a second surface of the first substrate; and a second outer substrate formed on the second surface of the second substrate.

KR 10-2018-0034056 discloses a window for a display device comprising a polymer base material; a first buffer layer located at the bottom of the polymer base material and having a modulus of 7 MPa to 30 MPa; a first transparent adhesive layer located between the polymer base material and the first buffer layer; and a protection layer located at the top of the polymer base material.

EP 3 617 777 B1 discloses an optical device capable of varying transmittance, and such an optical device can be used for various applications such as eyewear, for example, sunglasses or AR (augmented reality) or VR (virtual reality) eyewear, an outer wall of a building or a sunroof for a vehicle.

CN 103137022 discloses a cushion sheet including a cushion film and a plurality of bubble discharge members including openings extending through the cushion film for removing air bubbles generated at adhesion, the openings having a first end at a first surface of the cushion sheet and a second end at a second surface of the cushion sheet opposed to the first surface; wherein each of the plurality of bubble discharge members are inclined at a penetrating angle within the cushion sheet, the penetrating angle being an angle formed between a first line connecting the first end of the bubble discharge members to the respective second end and a line perpendicular to the first surface of the cushion sheet.

KR 10-2020-0044473 discloses an optical device including a first outer substrate, a second outer substrate, a liquid crystal element, a first adhesive film, and a dam.

KR 10-2018-0052810 discloses a cover window for a display device comprising a first film; a second film positioned on the first film; and an adhesive layer positioned between the first and second films, and including an elastic polymer. A shear elastic modulus of the adhesive layer is 20 kPa or higher and 50 kPa or lower.

### [Disclosure]

### [Technical Problem]

In order that the cell gap of the liquid crystal cell is maintained and the attachment force is secured between the upper substrate and the lower substrate, it may be considered that a spacer and an alignment film are formed on the lower substrate and a pressure-sensitive adhesive layer having both liquid crystal orientation force and adhesion force is formed on the upper substrate, followed by lamination. However, assuming that the liquid crystal cell is mounted on a mobile vehicle, it has a problem that light leakage occurs due to temporary misalignment of the liquid crystals which occurs upon external impacts when the vehicle passes over speed bumps or road surfaces severe irregularities.

It is an object of the present application to provide an optical device which can properly maintain a cell gap of a liquid crystal cell, have excellent adhesion between an upper substrate and a lower substrate, and solve light leakage due to misalignment of liquid crystals occurring upon external impacts.

### [Technical Solution]

The above problems are solved in accordance with the subject-matter of the independent claims. Further embodiments result from the subclaims and the following description.

Among the physical properties mentioned in this specification, when the measured temperature affects the results, the relevant physical property is a physical property measured at room temperature, unless otherwise specified. The term room temperature is a natural temperature without heating or cooling, which is usually a temperature in the range of about 10°C to 30°C, or about 23°C or about 25°C or so. In addition, unless otherwise specified in the specification, the unit of temperature is °C. Among the physical properties mentioned in this specification, when the measured pressure affects the results, the relevant physical property is a physical property measured at normal pressure, unless otherwise specified. The term normal pressure is a natural pressure without pressurization or depressurization, where usually about 1 atmosphere or so is referred to as normal pressure.

The present application relates to an optical device. The optical device of the present application may sequentially comprise a first outer substrate; a liquid crystal cell and a second outer substrate. The liquid crystal cell may comprise an upper substrate, a lower substrate, and a liquid crystal layer, which comprises a liquid crystal compound, between the upper substrate and the lower substrate. The upper substrate may comprise a first base layer and a pressure-sensitive adhesive layer. The lower substrate may comprise a second base layer and spacers. The first base layer may be disposed closer to the first outer substrate than the second base layer, and the second base layer may be disposed closer to the second outer substrate than the first base layer.

The optical device of the present application comprises a first buffer layer positioned between the first base layer and the first outer substrate. The liquid crystal cell may have a structure in which a pressure-sensitive adhesive layer capable of orientation and a spacer are adjacent to each other. In the case of such a structure, it is vulnerable to external pressures due to the low elastic modulus of the pressure-sensitive adhesive layer, whereby deformation may occur due to the instantaneous pressure, and the orientation of the vertically aligned liquid crystals is distorted by the relevant deformation, whereby light leakage may occur. According to the present application, as the buffer layer is introduced between the outer substrate and the liquid crystal cell, it is possible to absorb external impacts, and it is possible to suppress the defects in which the light leakage occurs. Particularly, by applying, as the buffer layer, a buffer layer having a loss elastic modulus lower than the loss elastic modulus of the pressure-sensitive adhesive layer inside the liquid crystal cell, it is possible to effectively suppress the defects in which the light leakage occurs.

In one example, the loss elastic modulus of the pressure-sensitive adhesive layer at a temperature of 25°C and a frequency of 1Hz may be in a range of 50,000 Pa to 2 MPa. The loss elastic modulus may be, specifically, 100,000 Pa or more, 300,000 Pa or more, 500,000 Pa or more, 700,000 Pa or more, or 900,000 Pa or more, and may be 1.8 MPa or less, 1.6 MPa or less, 1.4 MPa or less, 1.2 MPa or less, or 1.0 MPa or less. In one example, the storage elastic modulus of the pressure-sensitive adhesive layer at a temperature of 25°C and a frequency of 1Hz may be in a range of 0.2 MPa to 10 MPa. The storage elastic modulus of the pressure-sensitive adhesive layer may be, specifically, 0.3 MPa or more, 0.4 MPa or more, 0.5 MPa or more, 0.6 MPa or more, or 0.7 MPa or more, and may be 8 MPa or less, 6 MPa or less, 4 MPa or less, 2 MPa or less, or 1 MPa or less. The values of the storage elastic modulus and loss elastic modulus of the pressure-sensitive adhesive layer may increase as the frequency increases in a range of 0.6 rad/sec to 100 rad/sec. For example, the storage elastic modulus and loss elastic modulus of the pressure-sensitive adhesive layer at a temperature of 25°C and a frequency of 10 Hz may be higher than the storage elastic modulus and loss elastic modulus at a temperature of 25°C and a frequency of 1 Hz, respectively. The loss elastic modulus and storage elastic modulus of the pressure-sensitive adhesive layer at a temperature of 25°C and a frequency of 10 Hz may each independently be in the range of 1 MPa to 10 MPa. The loss elastic modulus and storage elastic modulus of the pressure-sensitive adhesive layer may each independently be 1.5 MPa or more, and may be 10 MPa or less, 8 MPa or less, 6 MPa or less, 4 MPa or less, or 2 MPa or less. If the loss and/or storage elastic modulus of the pressure-sensitive adhesive layer inside the liquid crystal cell is too low, it may be difficult to maintain the cell gap of the liquid crystal cell, and if the loss and/or storage elastic modulus of the pressure-sensitive adhesive layer inside the liquid crystal cell is too high, it may be difficult to impart a pressure-sensitive adhesive effect, so that it may be advantageous that the loss and/or storage elastic modulus may be in the above range. In one example, the storage elastic modulus of the pressure-sensitive adhesive layer may have a higher value than the loss elastic modulus under the same frequency condition.

In one example, the loss elastic modulus of the first buffer layer at a temperature of 25°C and a frequency of 1Hz may be in a range of 1,000 Pa to 500,000 Pa. The loss elastic modulus may be, specifically, 3,000 Pa or more, 5,000 Pa or more, 7,000 Pa or more, 9,000 Pa or more, 10,000 Pa or more, 15,000 Pa or more, 20,000 Pa or more, 30,000 Pa or more, 40,000 Pa or more, or 50,000 Pa or more, and may be 400,000 Pa or less, 300,000 Pa or less, 200,000 Pa or less, 100,000 Pa or less, 80,000 Pa or less, 60,000 Pa or less, 40,000 Pa or less, 20,000 Pa or less, or 10,000 Pa or less. In one example, the storage elastic modulus of the first buffer layer at a temperature of 25°C and a frequency of 1Hz may be in a range of 100 Pa to 500,000 Pa. The storage elastic modulus of the first buffer layer may be, specifically, 1,000 Pa or more, 10,000 Pa or more, 30,000 Pa or more, 50,000 Pa or more, 70,000 Pa or more, 90,000 Pa or more, or 11,000 Pa or more, and may be 400,000 Pa or less, 300,000 Pa or less, 200,000 Pa or less, 150,000 Pa or less, 100,000 Pa or less, 80,000 Pa or less, 60,000 Pa or less, or 50,000 Pa or less. The values of the loss elastic modulus and storage elastic modulus of the first buffer layer may increase as the frequency increases in a range of 0.6 rad/sec to 100 rad/sec. For example, the loss elastic modulus and storage elastic modulus of the first buffer layer at a temperature of 25°C and a frequency of 10 Hz may be higher than the loss elastic modulus and storage elastic modulus at a temperature of 25°C and a frequency of 1 Hz, respectively. The loss elastic modulus and storage elastic modulus of the first buffer layer at a temperature of 25°C and a frequency of 10 Hz may each independently be in the range of 10,000 Pa to 500,000 MPa. The loss elastic modulus of the first buffer layer at a frequency of 10 Hz may be 15,000 Pa or more, and may be 400,000 Pa or less, 300,000 Pa or less, 200,000 Pa or less, 100,000 Pa or less, 80,000 Pa or less, 60,000 Pa or less, 40,000 Pa or less, or 20,000 Pa or less. The storage elastic modulus of the first buffer layer at a frequency of 10 Hz may be, specifically, 30,000 Pa or more, or 50,000 Pa or more, and may be 400,000 Pa or less, 300,000 Pa or less, 200,000 Pa or less, 150,000 Pa or less, 100,000 Pa or less, 80,000 Pa or less, or 70,000 Pa or less. If the loss and/or storage elastic modulus of the first buffer layer is too low, it may be difficult to manufacture it with an appropriate thickness, and problems in a post-process such as stickiness loss may occur, and if the loss and/or storage elastic modulus of the first buffer layer is too high, it may not be sufficient to absorb external impacts applied to the liquid crystal cell, so that it may be appropriate that the loss and/or storage elastic modulus of the first buffer layer is in the above range. In one example, the storage elastic modulus of the first buffer layer may have a higher value than the loss elastic modulus under the condition of the same wave number.

The first outer substrate and the second outer substrate may each independently be an inorganic substrate or a plastic substrate. A well-known inorganic substrate may be used as the inorganic substrate without any particular limitation. In one example, a glass substrate having excellent light transmittance may be used as the inorganic substrate. As an example of the glass substrate, a soda lime glass substrate, a general tempered glass substrate, a borosilicate glass substrate or an alkali-free glass substrate, and the like may be used, without being limited thereto. As the polymer substrate, a cellulose film such as TAC (triacetyl cellulose) or DAC (diacetyl cellulose); a COP (cyclo olefin copolymer) film such as norbornene derivatives; an acrylic film such as PAR (polyacrylate) or PMMA (poly(methyl methacrylate); a PC (polycarbonate) film; a polyolefin film such as PE (polyethylene) or PP (polypropylene); a PVA (polyvinyl alcohol) film; a PI (polyimide) film; a sulfone-based film such as a PSF (polysulfone) film, a PPS (polyphenylsulfone) film or a PES (polyethersulfone) film; a PEEK (polyetheretherketon) film; a PEI (polyetherimide) film; a polyester-based film such as a PEN (polyethylenenaphthatlate) film or a PET (polyethyleneterephtalate) film; or a fluororesin film, and the like may be used, without being limited thereto. In each of the first outer substrate and the second outer substrate, a coating layer of: gold; silver; or a silicon compound such as silicon dioxide or silicon monoxide, or a functional layer such as an antireflection layer may also be present as needed.

In one example, the first outer substrate and/or the second outer substrate may be a glass substrate.

The first outer substrate and the second outer substrate may each have a thickness of about 0.3 mm or more. In another example, the thickness may be about 0.5 mm or more, 1 mm or more, 1.5 mm or more, or about 2 mm or more, and may also be about 10 mm or less, 9 mm or less, 8 mm or less, 7 mm or less, 6 mm or less, 5 mm or less, 4 mm or less, or about 3 mm or less.

The first outer substrate and the second outer substrate may be a flat substrate or may be a substrate having a curved surface shape. For example, the first outer substrate and the second outer substrate may be simultaneously flat substrates, simultaneously have a curved surface shape, or any one may be a flat substrate and the other may be a substrate having a curved surface shape. In addition, here, in the case of having the curved surface shape at the same time, the respective curvatures or curvature radii may be the same or different. In this specification, the curvature or curvature radius may be measured in a manner known in the industry, and for example, may be measured using a contactless apparatus such as a 2D profile laser sensor, a chromatic confocal line sensor or a 3D measuring confocal microscopy. The method of measuring the curvature or curvature radius using such an apparatus is known.

With respect to the first outer substrate and the second outer substrate, for example, when the curvatures or curvature radii on the front surface and the back surface are different, the respective curvatures or curvature radii of the opposing surfaces, that is, the curvature or curvature radius of the surface facing the second outer substrate in the case of the first outer substrate and the curvature or curvature radius of the surface facing the first outer substrate in the case of the second outer substrate may be a reference. Furthermore, when the relevant surface has portions that the curvatures or curvature radii are not constant and different, the largest curvature or curvature radius may be a reference, or the smallest curvature or curvature radius may be a reference, or the average curvature or average curvature radius may be a reference.

The first outer substrate and the second outer substrate may each have a difference in curvature or curvature radius within about 10%, within 9%, within 8%, within 7%, within 6%, within 5%, within 4%, within 3%, within 2% or within about 1%. When a large curvature or curvature radius is CL and a small curvature or curvature radius is CS, the difference in curvature or curvature radius is a value calculated by 100×(CL-CS)/CS. In addition, the lower limit of the difference in curvature or curvature radius is not particularly limited. Since the differences in curvatures or curvature radii of the first and second outer substrates can be the same, the difference in curvature or curvature radius may be about 0% or more, or more than about 0%. The control of such a curvature or curvature radius is useful in a structure in which a liquid crystal cell and an adhesive layer are in contact with each other as in the optical device of the present application. That is, when the difference in curvature or curvature radius exceeds 10%, a problem in which the bonded outer substrates are spread due to deterioration of bonding force may occur at the time when the outer substrates and the liquid crystal cell are in contact with the adhesive layers to be described below. However, if it is controlled within 10%, it is possible to effectively prevent the problem that the bonded outer substrates are spread due to deterioration of the bonding force.

The first outer substrate and the second outer substrate may have the same curvature sign. In other words, the first and second outer substrates may be bent in the same direction. That is, in the above case, both the center of curvature of the first outer substrate and the center of curvature of the second outer substrate exist in the same portion of the upper part and the lower part of the first and second outer substrates. When the first and second outer substrates are bent in the same direction, the first and second outer substrates can be more efficiently bonded by the adhesive layers, and after bonding, the bonding force deterioration of the first and second outer substrates and the liquid crystal cell and/or the polarizer can be prevented more effectively.

The specific range of each curvature or curvature radius of the first outer substrate and the second outer substrate is not particularly limited. In one example, the curvature radius of each of the first and second outer substrates may be about 100R or more, 200R or more, 300R or more, 400R or more, 500R or more, 600R or more, 700R or more, 800R or more, or about 900R or more, or may be about 10,000R or less, 9,000R or less, 8,000R or less, 7,000R or less, 6,000R or less, 5,000R or less, 4,000R or less, 3,000R or less, 2,000R or less, 1,900R or less, 1,800R or less, 1,700R or less, 1,600R or less, 1,500 R or less, 1,400R or less, 1,300R or less, 1,200R or less, 1,100R or less, or about 1,050R or less. Here, R means the degree of curvature of a circle having a radius of 1 mm. Thus, here, for example, 100R is the degree of curvature of a circle having a radius of 100mm or the curvature radius for such a circle. The first and second outer substrates may have the same or different curvature radii in the above range. In one example, when the curvatures of the first and second outer substrates are different from each other, the curvature radius of the substrate having a large curvature among them may be within the above range. In one example, when the curvatures of the first and second outer substrates are different from each other, a substrate having a large curvature among them may be a substrate that is disposed in the gravity direction upon using the optical device. When the curvature or curvature radius of the first and second outer substrates is controlled as above, the net force, which is the sum of the restoring force and the gravity, may act to prevent the widening, even if the bonding force by the adhesive layer to be described below is decreased.

The optical device may further comprise at least one adhesive layer positioned between the first outer substrate and the liquid crystal cell, and between the second outer substrate and the liquid crystal cell.

In one example, the optical device may further comprise a first adhesive layer in contact with the inner side surface of the first outer substrate and a second adhesive layer in contact with the inner side surface of the second outer substrate. In this specification, the inner side surface of the first outer substrate may mean a surface of the first outer substrate facing the liquid crystal cell, and the inner side surface of the second outer substrate may mean a surface of the second outer substrate facing the liquid crystal cell. In this specification, the matter that A contacts B may mean a state where A and B are in direct contact without any intermediate between A and B. The surface of the first adhesive layer which is not in contact with the first outer substrate may be in contact with a first polarizer or a first buffer layer as described below. The surface of the second adhesive layer which is not in contact with the second outer substrate may be in contact with a second polarizer or a second buffer layer as described below.

In one example, the loss elastic moduli of the first adhesive layer and the second adhesive layer may each be higher than the loss elastic modulus of the pressure-sensitive adhesive layer inside the liquid crystal cell. In addition, the storage elastic moduli of the first adhesive layer and the second adhesive layer are each be higher than the storage elastic modulus of the pressure-sensitive adhesive layer. When the storage elastic moduli or loss elastic moduli of the first adhesive layer and the second adhesive layer are too low, thermal behavior of the film is not controlled during endurance processes, whereby appearance defects may occur. In one example, the loss elastic moduli of the first adhesive layer and the second adhesive layer at a temperature of 25°C and a frequency of 1 Hz may each be in a range of 1 MPa to 100 MPa. The loss elastic modulus may be, specifically, 80 MPa or less, 60 MPa or less, 40 MPa or less, 20 MPa or less, 10 MPa or less, 8 MPa or less, 6 MPa or less, 4 MPa or less, or 2 MPa or less. In one example, the storage elastic moduli of the first adhesive layer and the second adhesive layer at a temperature of 25°C and a frequency of 1 Hz may each be in a range of 1 MPa to 100 MPa. The storage elastic modulus may be, specifically, 2 MPa or more, or 3 MPa or more, and may be 80 MPa or less, 60 MPa or less, 40 MPa or less, 20 MPa or less, 10 MPa or less, 8 MPa or less, 6 MPa or less, or 4 MPa or less. The values of the storage elastic modulus and loss elastic modulus of the adhesive layer may increase as the frequency increases within a range of 0.6 rad/sec to 100 rad/sec. For example, the storage elastic moduli and loss elastic moduli of the first adhesive layer and the second adhesive layer at a temperature of 25°C and a frequency of 10 Hz may be higher than the storage elastic moduli and loss elastic moduli at a temperature of 25°C and a frequency of 1 Hz, respectively. The loss elastic moduli and storage elastic moduli of the first adhesive layer and the second adhesive layer at a temperature of 25°C and a frequency of 10 Hz may each independently be in the range of 1 MPa to 100 MPa. The storage elastic moduli of the first adhesive layer and the second adhesive layer may each be, specifically, 2 MPa or more, 4 MPa or more, or 6 MPa or more, and may each be 80 MPa or less, 60 MPa or less, 40 MPa or less, 20 MPa or less, or 10 MPa or less, or 8 MPa or less. The loss elastic moduli of the first adhesive layer and the second adhesive layer may each be, specifically, 2 MPa or more, or 3 MPa or more, and may be 80 MPa or less, 60 MPa or less, 40 MPa or less, 20 MPa or less, 10 MPa or less, 8 MPa, 6 MPa or less, or 4 MPa or less. In one example, the storage elastic moduli of the first adhesive layer and the second adhesive layer under the same frequency condition may each have a higher value than the loss elastic moduli of the first adhesive layer and the second adhesive layer.

In one example, the first buffer layer may be in contact with the outer side surface of the first base layer. In this specification, the outer side surface of the first base layer may mean a surface of the first base layer facing the first outer substrate.

In another example, the first buffer layer may be in contact with the inner side surface of the first adhesive layer. In this specification, the inner side surface of the first adhesive layer may mean a surface of the first adhesive layer facing the liquid crystal cell.

In one example, the optical device may further comprise a third adhesive layer in contact with the outer side surface of the first base layer and a fourth adhesive layer in contact with the outer side surface of the second base layer. In this specification, the outer side surface of the second base layer may mean a surface of the second base layer facing the second outer substrate. A surface of the third adhesive layer not in contact with the first base layer may be in contact with a first polarizer to be described below. A surface of the fourth adhesive layer not in contact with the second base layer may be in contact with a second polarizer to be described below.

The third adhesive layer may be positioned between the first polarizer and the liquid crystal cell, and the fourth adhesive layer may be positioned between the second polarizer and the liquid crystal cell. In this case, the thicknesses of the third adhesive layer and/or the fourth adhesive layer may each be 380µm or less. Through this, the separation distance between the first polarizer and the second polarizer is minimized, so that it is possible to secure structural safety of the liquid crystal cell while reducing the light leakage. The lower limits of the thicknesses of the third adhesive layer and/or the fourth adhesive layer may each be 10µm or more.

The loss elastic moduli of the third adhesive layer and the fourth adhesive layer may each be higher than the loss elastic modulus of the pressure-sensitive adhesive layer. In addition, the storage elastic moduli of the third adhesive layer and the fourth adhesive layer may each be higher than the storage elastic modulus of the pressure-sensitive adhesive layer. When the storage elastic moduli or loss elastic moduli of the third adhesive layer and the fourth adhesive layer are too low, thermal behavior of the film is not controlled during endurance processes, whereby appearance defects may occur. In one example, the storage elastic moduli of the third adhesive layer and the fourth adhesive layer may each be in a range of 1 MPa to 100 MPa. In one example, the loss elastic moduli of the third adhesive layer and the fourth adhesive layer may each be in a range of 1 MPa to 100 MPa. Regarding details about the loss elastic moduli or storage elastic moduli of the third and fourth adhesive layers, the contents described in the first and second adhesive layers may be equally applied thereto.

The optical device may further comprise a first polarizer positioned between the first outer substrate and the liquid crystal cell and a second polarizer positioned between the second outer substrate and the liquid crystal cell. In this specification, the term polarizer means a film, sheet or element having a polarization function. The polarizer is a functional element capable of extracting light vibrating in one direction from incident light vibrating in multiple directions.

The first polarizer and the second polarizer may each be an absorption type polarizer or a reflection type polarizer. In this specification, the absorption type polarizer means an element showing selective transmission and absorption characteristics with respect to incident light. The polarizer may transmit, for example, light vibrating in any one direction from incident light vibrating in multiple directions, and may absorb light vibrating in the other directions. In this specification, the reflection type polarizer means an element showing selective transmission and reflection characteristics with respect to incident light. The polarizer may transmit, for example, light vibrating in any one direction from incident light vibrating in multiple directions, and may reflect light vibrating in the other directions. According to one example of the present application, the polarizer may be an absorption type polarizer.

Each of the first polarizer and the second polarizer may be a linear polarizer. In this specification, the linear polarizer means a case in which the selectively transmitted light is linearly polarized light vibrating in any one direction, and the selectively absorbed or reflected light is linearly polarized light vibrating in a direction perpendicular to the vibration direction of the linearly polarized light. In the case of the absorption type linear polarizer, the light transmission axis and the light absorption axis may be perpendicular to each other. In the case of the reflection type linear polarizer, the light transmission axis and the light reflection axis may be perpendicular to each other.

In one example, the first polarizer and the second polarizer may each be a stretched polymer film dyed with iodine or an anisotropic dye. As the stretched polymer film, a PVA (poly(vinyl alcohol)) stretched film may be exemplified. In another example, each of the first polarizer and the second polarizer may be a guest-host type polarizer in which a liquid crystal polymerized in an oriented state is a host, and an anisotropic dye arranged according to the orientation of the liquid crystal is a guest. In another example, the first polarizer and the second polarizer may each be a thermotropic liquid crystal film or a lyotropic liquid crystal film.

A protective film, an antireflection film, a retardation film, a pressure-sensitive adhesive layer, an adhesive layer, a surface treatment layer, and the like may be additionally formed on one side or both sides of the first polarizer and the second polarizer, respectively. The retardation film may be, for example, a 1/4 wave plate or a 1/2 wave plate. The 1/4 wave plate may have an in-plane retardation value for light having a wavelength of 550 nm in a range of about 100 nm to 180nm, 100nm, or 150nm. The 1/2 wave plate may have an in-plane retardation value for light having a wavelength of 550 nm in a range of about 200nm to 300nm or 250nm to 300nm. The retardation film may be, for example, a stretched polymer film or a liquid crystal polymerization film.

The first polarizer and the second polarizer may each have transmittance for light with a wavelength of 550nm in a range of 40% to 50%. The transmittance may mean single transmittance of the polarizer for light with a wavelength of 550nm. The single transmittance of the polarizer may be measured using, for example, a spectrometer (V7100, manufactured by Jasco). For example, after air is set as the base line in a state where the polarizer sample (without upper and lower protective films) is mounted on the device, and each transmittance is measured in a state where the axis of the polarizer sample is aligned vertically and horizontally with the axis of the reference polarizer, the single transmittance can be calculated.

The light transmission axis of the first polarizer and the light transmission axis of the second polarizer may be perpendicular to each other. Specifically, the angle formed by the light transmission axis of the first polarizer and the light transmission axis of the second polarizer may be in a range of 80 degrees to 100 degrees or 85 degrees to 95 degrees. When the light transmission axis of the first polarizer and the light transmission axis of the second polarizer are perpendicular to each other, light leakage may occur depending on the separation distance between the first polarizer and the second polarizer.

In one example, the optical device may further comprise a fifth adhesive layer in contact with the outer side surface of the first polarizer and a sixth adhesive layer in contact with the outer side surface of the second polarizer. The outer side surface of the first polarizer may mean a surface of the first polarizer facing the first outer substrate. The outer side surface of the second polarizer may mean a surface of the second polarizer facing the second outer substrate. The surface of the fifth adhesive layer not in contact with the first polarizer may be in contact with the first buffer layer, and the surface of the sixth adhesive layer not in contact with the second polarizer may be in contact with a second buffer layer to be described below. The storage elastic moduli of the fifth adhesive layer and the sixth adhesive layer may each be higher than the storage elastic modulus of the pressure-sensitive adhesive layer. In addition, the loss elastic moduli of the fifth adhesive layer and the sixth adhesive layer may each be higher than the loss elastic modulus of the pressure-sensitive adhesive layer. If the storage elastic moduli or loss elastic moduli of the fifth adhesive layer and the sixth adhesive layer are too low, thermal behavior of the film is not controlled during endurance processes, whereby appearance defects may occur. In one example, the storage elastic moduli of the fifth adhesive layer and the sixth adhesive layer may each be in a range of 1 MPa to 100 MPa. In one example, the loss elastic moduli of the fifth adhesive layer and the sixth adhesive layer may each be in a range of 1 MPa to 100 MPa. Regarding details about the loss elastic moduli or storage elastic moduli of the fifth and sixth adhesive layers, the contents described in the first and second adhesive layers may be equally applied thereto.

In one example, the optical device may further comprise a second buffer layer. The second buffer layer may be positioned between the second base layer of the liquid crystal cell and the second outer substrate. The loss elastic modulus of the second buffer layer may be lower than the loss elastic modulus of the pressure-sensitive adhesive layer. The storage elastic modulus of the second buffer layer may be lower than the storage elastic modulus of the pressure-sensitive adhesive layer. When the optical device further comprises the second buffer layer, it may be more advantageous to suppress light leakage by absorbing external impacts. If there is no special mention for the second buffer layer, the same configuration as the first buffer layer may be applied.

In one example, the second buffer layer may be in contact with the outer side surface of the second base layer. Alternatively, the second buffer layer may be in contact with the inner side surface of the second adhesive layer.

In one example, the optical device may comprise a first buffer layer and may not comprise a second buffer layer. In another example, the optical device may comprise both the first buffer layer and the second buffer layer. At this instance, when the optical device comprises both the first buffer layer and the second buffer layer, it may be advantageous in terms of suppressing light leakage.

The total thickness of the buffer layers included in the optical device may be, for example, in a range of 50µm to 2000µm. The total thickness of the buffer layer may be specifically, 100 µm or more, 200 µm or more, 300 µm or more, 400 µm or more, 500 µm or more, 600 µm or more, 700 µm or more, 800 µm or more, 900 µm or more, or 1000 µm or more, and may be 1800 µm or less, 1600 µm or less, or 1400 µm or less. The total thickness of the buffer layers may mean the thickness of the first buffer layer when the optical device comprises the first buffer layer and does not comprise the second buffer layer, and it may mean the sum of the thickness of the first buffer layer and the thickness of the second buffer layer when the optical device comprises both the first buffer layer and the second buffer layer. Each of the first buffer layer and/or the second buffer layer may have a single-layer structure or a multi-layer structure. When the first buffer layer and/or the second buffer layer has a multi-layer structure in which a plurality of sub-buffer layers is laminated, the thickness of the sub-buffer layer may be, for example, in a range of 100 µm to 500 µm, a range of 200 µm to 400 µm, or a range of 200 µm to 300 µm.

As the first buffer layer and the second buffer layer, the pressure-sensitive adhesive layer satisfying the storage elastic modulus or loss elastic modulus may be used. The pressure-sensitive adhesive layer may be optically transparent. The pressure-sensitive adhesive layer may have average transmittance of about 80% or more, 85% or more, 90% or more, or 95% or more for the visible light region, for example, a wavelength of 380 nm to 780 nm.

As the pressure-sensitive adhesive layer, various types of pressure-sensitive adhesives known in the industry as a so-called OCA (optically clear adhesive) may be appropriately used. The pressure-sensitive adhesive may be different from an OCR (optically clear resin) type adhesive which is cured after the object to be attached is bonded in that it is cured before the object to be attached is bonded. As the pressure-sensitive adhesive, for example, an acrylic, silicone-based, epoxy-based, or urethane-based pressure-sensitive adhesive may be applied.

In one example, the first buffer layer and/or the second buffer layer may have a storage elastic modulus of 500,000 Pa or less, 400,000 Pa or less, 300,000 Pa or less, 200,000 Pa or less, 150,000 Pa or less, 100,000 Pa or less, 80,000 Pa or less, or 60,000 Pa or less in the entire frequency section in the range of 0.6 rad/sed to 100 rad/sec at a temperature of 25°C. The first buffer layer and/or the second buffer layer may have a storage elastic modulus of 100 Pa or more, 1,000 Pa or more, 5000 Pa or more, 10,000 Pa or more, 20,000 Pa or mor e, 30,000 Pa or more, or 40,000 Pa or more in the entire frequency section in the range of 0.6 rad/sed to 100 rad/sec at a temperature of 25°C.

In one example, the first buffer layer and/or the second buffer layer may have a loss elastic modulus of 500,000 Pa or less, 400,000 Pa or less, 300,000 Pa or less, 200,000 Pa or less, 150,000 Pa or less, 100,000 Pa or less, 80,000 Pa or less, 60,000 Pa or less, 40,000 Pa or less or 20,000 Pa or less in the entire frequency section in the range of 0.6 rad/sed to 100 rad/sec at a temperature of 25°C. The first buffer layer and/or the second buffer layer may have a loss elastic modulus of 1,000 Pa or more, 3,000 Pa or more, 5000 Pa or more, 7,000 Pa or more, or 9,000 Pa or more in the entire frequency section in the range of 0.6 rad/sed to 100 rad/sec at a temperature of 25°C.

In one example, the loss elastic modulus of the pressure-sensitive adhesive layer in the entire frequency section in the range of 0.6 rad/sec to 100 rad/sec at a temperature of 25°C may be 6,000,000 Pa or less, 5,000,000 Pa or less, 4,000,000 Pa or less, 3,000,000 Pa or less, or 2,500,000 Pa or less, and may be 1,000 Pa or more, 3,000 Pa or more, 5,000 Pa or more, 7,000 Pa or more, or 9,000 Pa or more. In one example, the storage elastic modulus of the pressure-sensitive adhesive layer in the entire frequency section in the range of 0.6 rad/sec to 100 rad/sec at a temperature of 25°C may be 6,000,000 Pa or less, 5,000,000 Pa or less, 4,000,000 Pa or less, 3,000,000 Pa or less, or 2,500,000 Pa or less, and may be 1,000 Pa or more, 3,000 Pa or more, 5,000 Pa or more, or 7,000 Pa or more.

In one example, the loss elastic moduli of the first to sixth adhesive layers in the entire frequency section in the range of 0.6 rad/sec to 100 rad/sec at a temperature of 25°C may each independently be 100 MPa or less, 80 MPa or less, 60 MPa or less, 40 MPa or less, 20 MPa or less, or 10 MPa or less, and may be 0.1 MPa or more, 0.5 MPa or more, or 1.0 MPa or more. In one example, the storage elastic moduli of the first to sixth adhesive layers in the entire frequency section in the range of 0.6 rad/sec to 100 rad/sec at a temperature of 25°C may each independently be 100 MPa or less, 80 MPa or less, 60 MPa or less, 40 MPa or less, 20 MPa or less, or 10 MPa or less, and may be 0.1 MPa or more, 0.5 MPa or more, or 1.0 MPa or more.

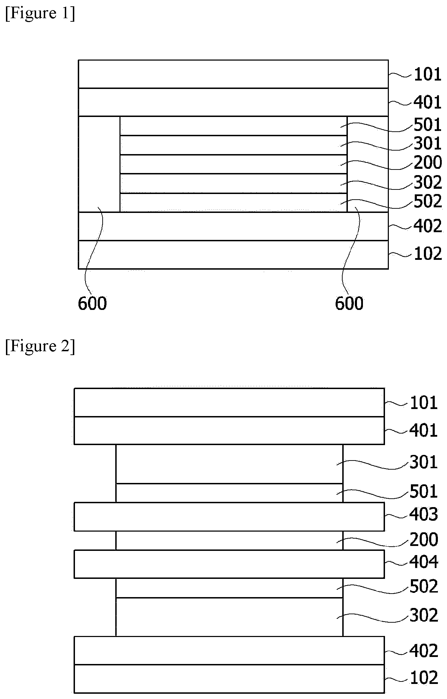

Figures 1 to 4 exemplarily show the structures of the optical devices of the first to fourth examples of the present application, respectively.

Figure 1 exemplarily shows a structure of an optical device sequentially comprising a first outer substrate (101), a first adhesive layer (401), a first polarizer (501), a first buffer layer (301), a liquid crystal cell (200), a second buffer layer (302), a second polarizer (502), a second adhesive layer (402), and a second outer substrate (102).

Figure 2 exemplarily shows a structure of an optical device sequentially comprising a first outer substrate (101), a first adhesive layer (401), a first buffer layer (301), a first polarizer (501), a third adhesive layer (403), a liquid crystal cell (200), a fourth adhesive layer (404), a second polarizer (502), a second buffer layer (302), a second adhesive layer (402), and a second outer substrate (102).

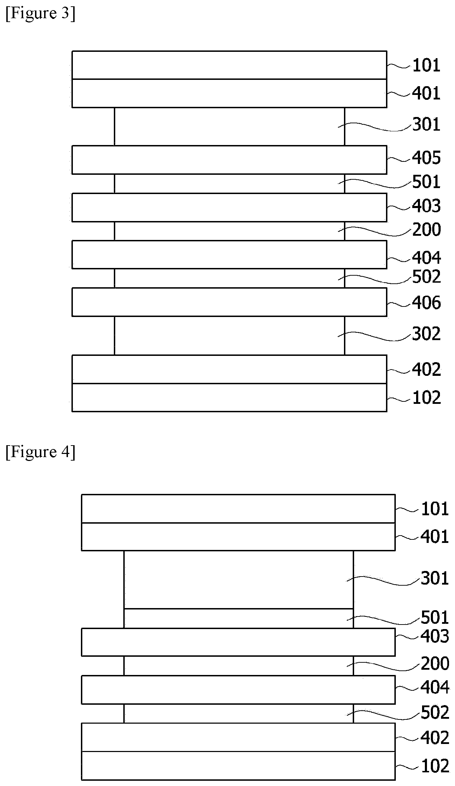

Figure 3 exemplarily shows a structure of an optical device sequentially comprising a first outer substrate (101), a first adhesive layer (401), a first buffer layer (301), a fifth adhesive layer (405), a first polarizer (501), a third adhesive layer (403), a liquid crystal cell (200), a fourth adhesive layer (404), a second polarizer (502), a sixth adhesive layer (406), a second buffer layer (302), a second adhesive layer (402), and a second outer substrate (102).

Figure 4 exemplarily shows a structure of an optical device sequentially comprising a first outer substrate (101), a first adhesive layer (401), a first buffer layer (301), a first polarizer (501), a third adhesive layer (403), a liquid crystal cell (200), a fourth adhesive layer (404), a second polarizer (502), a second adhesive layer (402), and a second outer substrate (102).

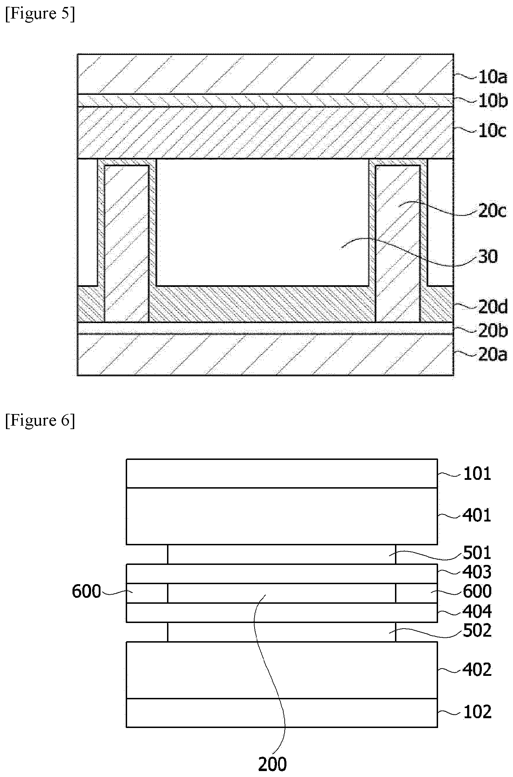

Figure 5 exemplarily shows a liquid crystal cell. As shown in Figure 5, the liquid crystal cell may comprise a first base layer (10a), a pressure-sensitive adhesive layer (10c) formed on the inside of the first base layer, a second base layer (20a) disposed opposite to the first base layer (10a), spacers (20c) formed on the inside of the second base layer (20a), and a liquid crystal layer (30) positioned between the first base layer (10a) and the second base layer (20a).

As the first base layer and the second base layer, for example, an inorganic film such as a glass film, a crystalline or amorphous silicon film or a quartz or ITO (indium tin oxide) film, or a polymer film, and the like may be used, and in terms of implementation of flexible elements, the polymer film may be used.

In one example, each of the first base layer and the second base layer may be a polymer film. As the polymer film, TAC (triacetyl cellulose); COPs (cyclo olefin copolymers) such as norbornene derivatives; PMMA (poly(methyl methacrylate); PC (polycarbonate); PE (polyethylene); PP (polypropylene); PVA (polyvinyl alcohol); DAC (diacetyl cellulose); PAC (polyacrylate); PES (poly ether sulfone); PEEK (polyetheretherketon); PPS (polyphenylsulfone), PEI (polyetherimide); PEN (polyethylenenaphthatlate); PET (polyethyleneterephtalate); PI (polyimide); PSF (polysulfone); PAR (polyarylate) or an amorphous fluororesin, and the like may be used, without being limited thereto. In the first base layer and the second base layer, a coating layer of gold, silver or a silicon compound such as silicon dioxide or silicon monoxide, or a functional layer such as an antireflection layer may also be present as needed.

The first base layer and the second base layer may each have a thickness of about 10 µm to about 1,000 µm. As another example, the base layers may each have a thickness of about 20 µm or more, 40 µm or more, 60 µm or more, 80 µm or more, 100 µm or more, 120 µm or more, 140 µm or more, 160 µm or more, or about 180 µm or more, and may be about 900 µm or less, 800 µm or less, 700 µm or less, 600 µm or less, 500 µm or less, or about 400 µm or less. When the thicknesses of the first base layer and the second base layer satisfy the above range, it is possible to reduce appearance defects such as wrinkles at the time of manufacturing an optical device by laminating the liquid crystal cell with outer substrates.

The pressure-sensitive adhesive layer may be present on the inner side surface of the first base layer. In this specification, the "inner side surface" of the constitution included in the liquid crystal cell may mean a surface facing the liquid crystal layer.

The pressure-sensitive adhesive layer may be optically transparent. The pressure-sensitive adhesive layer may have average transmittance of about 80% or more, 85% or more, 90% or more, or 95% or more for the visible light region, for example, a wavelength of 380 nm to 780 nm.

The pressure-sensitive adhesive layer may be a liquid crystal orientational pressure-sensitive adhesive layer. The pressure-sensitive adhesive layer may be, for example, a vertically orientational pressure-sensitive adhesive layer or a horizontally orientational pressure-sensitive adhesive layer. In this specification, the "vertically orientational pressure-sensitive adhesive" may mean a pressure-sensitive adhesive having attachment force capable of boding the upper substrate and the lower substrate while imparting vertical orientation force to the adjacent liquid crystal compound. In this specification, the "horizontally orientational pressure-sensitive adhesive" may mean a pressure-sensitive adhesive having attachment force capable of bonding the upper substrate and the lower substrate while imparting horizontal orientation force to the adjacent liquid crystal compound. The pretilt angle of the adjacent liquid crystal compound with respect to the vertically orientational pressure-sensitive adhesive may be in a range of 80 degrees to 90 degrees, 85 degrees to 90 degrees or about 87 degrees to 90 degrees, and the pretilt angle of the adjacent liquid crystal compound with respect to the horizontally orientational pressure-sensitive adhesive may be in a range of 0 degrees to 10 degrees, 0 degrees to 5 degrees or 0 degrees to 3 degrees.

In this specification, the pretilt angle may mean an angle formed by a director of a liquid crystal compound with respect to a plane horizontal to a liquid crystal orientational pressure-sensitive adhesive or an alignment film in a state where no voltage is applied. In this specification, the director of the liquid crystal compound may mean the optical axis or the slow axis of the liquid crystal layer. Alternatively, the director of the liquid crystal compound may mean a long axis direction when the liquid crystal compound has a rod shape, and may mean an axis parallel to the normal direction of the disk plane when the liquid crystal compound has a discotic shape.

The thickness of the pressure-sensitive adhesive layer may be, for example, in a range of 3µm to 15µm. When the thickness of the pressure-sensitive adhesive layer is within the above range, it may be advantageous to minimize defects such as pressing or crowding of the pressure-sensitive adhesive when used in the manufacture of a liquid crystal cell, while securing attachment force between the upper substrate and the lower substrate.

As the pressure-sensitive adhesive layer, various types of pressure-sensitive adhesives known in the industry as a so-called OCA (optically clear adhesive) may be appropriately used. The pressure-sensitive adhesive may be different from an OCR (optically clear resin) type adhesive which is cured after the object to be attached is bonded in that it is cured before the object to be attached is bonded. As the pressure-sensitive adhesive, for example, an acrylic, silicone-based, epoxy-based, or urethane-based pressure-sensitive adhesive may be applied.

The pressure-sensitive adhesive layer may comprise a cured product of a pressure-sensitive adhesive resin. In one example, the pressure-sensitive adhesive layer may comprise a silicone-based pressure-sensitive adhesive. The silicone-based pressure-sensitive adhesive may comprise a cured product of a curable silicone compound as the pressure-sensitive adhesive resin.

The type of the curable silicone compound is not particularly limited, and for example, a heat-curable silicone compound or an ultraviolet-curing silicone compound may be used. The curable silicone compound may be referred to as the pressure-sensitive adhesive resin.

In one example, the curable silicone compound may be an addition-curing silicone compound.

Specifically, the addition-curing silicone compound may be exemplified by (1) an organopolysiloxane containing two or more alkenyl groups in the molecule and (2) an organopolysiloxane containing two or more silicon-bonded hydrogen atoms in the molecule, but is not limited thereto. Such a silicone compound can form a cured product by an addition reaction, for example, in the presence of a catalyst such as platinum.

A more specific example of the (1) organopolysiloxane, which can be used in the present application, may include a dimethylsiloxane-methylvinylsiloxane copolymer blocking with trimethylsiloxane groups at both ends of the molecular chain, a methylvinylpolysiloxane blocking with trimethylsiloxane groups at both ends of the molecular chain, a dimethylsiloxane-methylvinylsiloxane-methylphenylsiloxane copolymer blocking with trimethylsiloxane groups at both ends of the molecular chain, a dimethylpolysiloxane blocking with dimethylvinylsiloxane groups at both ends of the molecular chain, a methyl vinylpolysiloxane blocking with dimethylvinylsiloxane groups at both ends of the molecular chain, a dimethylsiloxane-methylvinylsiloxane copolymer blocking with dimethylvinylsiloxane groups at both ends of the molecular chain, a dimethylsiloxane-methylvinylsiloxane-methylphenylsiloxane copolymer blocking with dimethylvinylsiloxane groups at both ends of the molecular chain, an organopolysiloxane copolymer comprising a siloxane unit represented by R¹₂SiO_{1/2} and a siloxane unit represented by R¹₂R²SiO_{1/2} and a siloxane unit represented by SiO_{4/2}, an organopolysiloxane copolymer comprising a siloxane unit represented by R¹₂R²SiO_{1/2} and a siloxane unit represented by SiO_{4/2}, an organopolysiloxane copolymer comprising a siloxane unit represented by R¹R²SiO_{2/2} and a siloxane unit represented by R¹SiO_{3/2} or a siloxane unit represented by R²SiO_{3/2}, and a mixture of two or more of the foregoing, but is limited thereto. Here, R¹ is a hydrocarbon group other than an alkenyl group, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenentyl group; a halogen-substituted alkyl group such as a chloromethyl group, a 3-chloropropyl group, or a 3,3,3-trifluoropropyl group, and the like. In addition, here, R² is an alkenyl group, which may be, specifically, a vinyl group, an allyl group, a butenyl group, a pentenyl group, a hexenyl group or a heptenyl group, and the like.

A more specific example of the (2) organopolysiloxane, which can be used in the present application, may include a methylhydrogenpolysiloxane blocking with trimethylsiloxane groups at both ends of the molecular chain, a dimethylsiloxane-methylhydrogen copolymer blocking with trimethylsiloxane groups at both ends of the molecular chain, a dimethylsiloxane-methylhydrogensiloxane-methylphenylsiloxane copolymer blocking with trimethylsiloxane groups at both ends of the molecular chain, a dimethylpolysiloxane blocking with dimethylhydrogensiloxane groups at both ends of the molecular chain, a dimethylsiloxane-methylphenylsiloxane copolymer blocking with dimethylhydrogensiloxane groups at both ends of the molecular chain, a methylphenylpolysiloxane blocking with dimethylhydrogensiloxane groups at both ends of the molecular chain, an organopolysiloxane copolymer comprising a siloxane unit represented by R¹₃SiO_{1/2}, a siloxane unit represented by R¹₂HSiO_{1/2} and a siloxane unit represented by SiO_{4/2}, an organopolysiloxane copolymer comprising a siloxane unit represented by R¹₂HSiO_{1/2} and a siloxane unit represented by SiO_{4/2}, an organopolysiloxane copolymer comprising a siloxane unit represented by R¹HSiO_{2/2} and a siloxane unit represented by R¹SiO_{3/2} or a siloxane unit represented by HSiO_{3/2} and a mixture of two or more of the foregoing, but is not limited thereto. Here, R¹ is a hydrocarbon group other than an alkenyl group, which may be, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenentyl group; a halogen-substituted alkyl group such as a chloromethyl group, a 3-chloropropyl group or a 3,3,3-trifluoropropyl group, and the like.

When the pressure-sensitive adhesive layer is a vertical orientation pressure-sensitive adhesive layer, the pressure-sensitive adhesive may have a surface energy of 16 mN/m or less. The lower limit of the surface energy may be, for example, 5 mN/m or more. When the pressure-sensitive adhesive layer is a horizontal orientation pressure-sensitive adhesive layer, the surface energy may be greater than 16 mN/m. The upper limit of the surface energy may be, for example, 50 mN/m or less. The surface energy can be measured using a drop shape analyzer (KRUSS' DSA100 product). Specifically, a process that deionized water with a known surface tension is dropped on the surface of the pressure-sensitive adhesive to obtain the contact angle is repeated 5 times, thereby obtaining the average value of the resulting five contact angle values, and equally a process that diiodomethane with a known surface tension is dropped thereon to obtain the contact angle is repeated 5 times, thereby obtaining the average value of the resulting five contact angle values. Then, the surface energy was obtained by substituting a numerical value (Strom value) for the surface tension of the solvent by the Owens-Wendt-Rabel-Kaelble method using the obtained average values of the contact angles for deionized water and diiodomethane. The surface energy (γ_{surface}) of the sample can be calculated by considering the dispersion force between nonpolar molecules and the interaction force between polar molecules (γ_{surface} = γ_{dispersion} + γₚₒₗₐᵣ), where the ratio of the polar term (γₚₒₗₐᵣ) in the surface energy γ_{surface} can be defined as polarity of the surface.

The upper substrate and the lower substrate of the liquid crystal cell may be attached by the pressure-sensitive adhesive layer. Specifically, the pressure-sensitive adhesive layer of the upper substrate and the spacer of the lower substrate may be attached. When the alignment film is formed on the spacer of the lower substrate, the region corresponding to the spacer of the alignment film may be attached to the pressure-sensitive adhesive layer of the upper substrate.

The liquid crystal layer may comprise a liquid crystal compound. As the liquid crystal compound, a liquid crystal compound capable of changing the alignment direction by application of an external action may be used. In this specification, the term "external action" may mean all external factors that may affect the behavior of materials included in the liquid crystal layer, for example, an external voltage, or the like. Therefore, the state without any external action may mean a state without application of an external voltage, or the like.

The type and physical properties of the liquid crystal compound may be appropriately selected in consideration of the purpose of the present application. In one example, the liquid crystal compound may be a nematic liquid crystal or a smectic liquid crystal. The nematic liquid crystal may mean a liquid crystal that rod-shaped liquid crystal molecules are arranged in parallel in the long-axis direction of the liquid crystal molecules although there is no regularity in their positions. The smectic liquid crystal may mean a liquid crystal that rod-shaped liquid crystal molecules are regularly arranged to form a layered structure and are arranged in parallel with regularity in the long axis direction. According to one example of the present application, the liquid crystal compound may be a nematic liquid crystal compound.

As the nematic liquid crystal compound, one having a clearing point of, for example, about 40°C or more, 50°C or more, 60°C or more, 70°C or more, 80°C or more, 90°C or more, 100°C or more, or about 110°C or more, or having a phase transition point, that is, a phase transition point to an isotropic phase on a nematic phase, in the above range, can be selected. In one example, the clearing point or phase transition point may be about 160°C or less, 150°C or less, or about 140°C or less.

The liquid crystal compound may be a non-reactive liquid crystal compound. The non-reactive liquid crystal compound may mean a liquid crystal compound having no polymerizable group. The polymerizable group may be exemplified by an acryloyl group, an acryloyloxy group, a methacryloyl group, a methacryloyloxy group, a carboxyl group, a hydroxy group, a vinyl group or an epoxy group, and the like, but is not limited thereto, and a functional group known as the polymerizable group may be included.

The liquid crystal compound may have dielectric constant anisotropy of a positive number or a negative number. The absolute value of the dielectric constant anisotropy of the liquid crystal compound may be appropriately selected in consideration of the purpose of the present application. The term "dielectric constant anisotropy (Δε)" may mean a difference (ε// - ε⊥) between the horizontal dielectric constant (ε//) and the vertical dielectric constant (ε⊥) of the liquid crystal. In this specification, the term horizontal dielectric constant (ε//) means a dielectric constant value measured along the direction of an electric field in a state where a voltage is applied so that the director of the liquid crystal and the direction of the electric field by the applied voltage are substantially horizontal, and the vertical dielectric constant (ε ⊥) means a dielectric constant value measured along the direction of an electric field in a state where a voltage is applied so that the director of the liquid crystal and the direction of the electric field by the applied voltage are substantially perpendicular. The dielectric constant anisotropy of the liquid crystal molecule may be in a range of 5 to 25.

The refractive index anisotropy of the liquid crystal compound may be appropriately selected in consideration of the purpose of the present application. In this specification, the term "refractive index anisotropy" may mean a difference between an extraordinary refractive index and an ordinary refractive index of a liquid crystal compound. The refractive index anisotropy of the liquid crystal compound may be, for example, 0.01 to 0.3. The refractive index anisotropy may be 0.01 or more, 0.05 or more, or 0.07 or more, and may be 0.3 or less, 0.2 or less, 0.15 or less, or 0.13 or less.

The liquid crystal layer may further comprise a dichroic dye. When the liquid crystal layer comprises a dichroic dye, it is less affected by cell gap fluctuations during the bonding process of the outer substrate even if the liquid crystal cell comprises a pressure-sensitive adhesive layer, so that there is an advantage that the thickness of the intermediate layer for securing structural stability and uniformity of quality of the liquid crystal cell can be made relatively thin.

The dichroic dye may control light transmittance variable properties of the liquid crystal layer. In this specification, the term "dye" may mean a material capable of intensively absorbing and/or deforming light in at least a part of or all the ranges within a visible light region, for example, within a wavelength range of 400 nm to 700 nm, and the term "dichroic dye" may mean a material capable of anisotropic absorption of light in at least a part of or all the ranges of the visible light region.

The liquid crystal layer comprising the liquid crystal compound and the dichroic dye may be a GHLC layer (guest host liquid crystal layer). In this specification, the "GHLC layer (guest host liquid crystal layer)" may mean a functional layer that dichroic dyes are arranged together depending on arrangement of the liquid crystal compound to exhibit anisotropic light absorption characteristics with respect to an alignment direction of the dichroic dyes and the direction perpendicular to the alignment direction, respectively. For example, the dichroic dye is a substance whose absorption rate of light varies with a polarization direction, where if the absorption rate of light polarized in the long axis direction is large, it may be referred to as a p-type dye, and if the absorption rate of polarized light in the short axis direction is large, it may be referred to as an n-type dye. In one example, when a p-type dye is used, the polarized light vibrating in the long axis direction of the dye may be absorbed and the polarized light vibrating in the short axis direction of the dye may be less absorbed to be transmitted. Hereinafter, unless otherwise specified, the dichroic dye is assumed to be a p-type dye.

As the dichroic dye, for example, a known dye known to have a property capable of being aligned according to the orientation state of the liquid crystal compound by a so-called guest host effect may be selected and used. An example of such a dichroic dye includes azo dyes, anthraquinone dyes, methine dyes, azomethine dyes, merocyanine dyes, naphthoquinone dyes, tetrazine dyes, phenylene dyes, quarterrylene dyes, benzothiadiazole dyes, diketopyrrolopyrrole dyes, squaraine dyes or pyromethene dyes, and the like, but the dyes applicable in the present application are not limited thereto.

As the dichroic dye, a dye having a dichroic ratio, that is, a value obtained by dividing the absorption of the polarized light parallel to the long axis direction of the dichroic dye by the absorption of the polarized light parallel to the direction perpendicular to the long axis direction, of 5 or more, 6 or more, or 7 or more, can be used. The dye may satisfy the dichroic ratio in at least a part of the wavelengths or any one wavelength within the wavelength range of the visible light region, for example, within the wavelength range of about 380 nm to 700 nm or about 400 nm to 700 nm. The upper limit of the dichroic ratio may be, for example, 20 or less, 18 or less, 16 or less, or 14 or less or so.

The content of the dichroic dye in the liquid crystal layer may be appropriately selected in consideration of the purpose of the present application. For example, the content of the dichroic dye in the liquid crystal layer may be 0.2 wt% or more. The content of the dichroic dye may specifically be 0.5 wt% or more, 1 wt% or more, 2 wt% or more, or 3 wt% or more. The upper limit of the content of the dichroic dye may be, for example, 10 wt% or less, 9 wt% or less, 8 wt% or less, 6 wt% or less, or 5 wt% or less. When the content of the dichroic dye in the liquid crystal layer is too small, it may be difficult to express the desired transmittance variable characteristics, and it may be insufficient to reduce the thickness of the adhesive layer for reducing the cell gap variation that may occur during the bonding process of the outer substrate. Meanwhile, when the content of the dichroic dye in the liquid crystal layer is too large, there is a risk of precipitation. Therefore, it may be advantageous that the content of the dichroic dye is within the above range.

The thickness of the liquid crystal layer is not particularly limited, and for example, the thickness of the liquid crystal layer may be about 0.01µm or more, 0.05µm or more, 0.1µm or more, 0.5µm or more, 1µm or more, 1.5µm or more, 2µm or more, 2.5µm or more, 3µm or more, 3.5µm or more, 4µm or more, 4.5µm or more, 5µm or more, 5.5µm or more, 6µm or more, 6. 5µm or more, 7µm or more, 7.5µm or more, 8µm or more, 8. 5µm or more, 9µm or more, or 9.5µm or more. The upper limit of the thickness of the liquid crystal layer is not particularly limited, which may generally be about 30µm or less, 25µm or less, 20µm or less, or 15µm or less.

The liquid crystal layer may switch between a first orientation state and a second orientation state different from the first orientation state. The switching may be adjusted, for example, through the application of external energy such as a voltage. For example, the liquid crystal layer may maintain any one of the first and second orientation states in a state where no voltage is applied, and may be switched to the other orientation state by voltage application.

In one example, the first orientation state may be a twist orientation state. That is, the liquid crystal layer may switch between twist orientation and an orientation state different from the twist orientation through the application of external energy.

In one example, the liquid crystal layer may switch between twist orientation and vertical orientation states. In one example, the liquid crystal layer may be in the vertical orientation state in a state where no voltage is applied, and may be in the twist orientation state in a state where a voltage is applied.

In this specification, the "vertical orientational state" is a state where the director of the liquid crystal compound in the liquid crystal layer is arranged substantially perpendicular to the plane of the liquid crystal layer, where for example, the angle formed by the director of the liquid crystal compound with respect to the plane of the liquid crystal layer may be, for example, in the range of about 80 degrees to 100 degrees or 85 degrees to 95 degrees, or may form approximately about 90 degrees.

In this specification, the "twisted orientational state" may mean a spiral structure in which the directors of the liquid crystal compounds in the liquid crystal layer are twisted along an imaginary spiral axis to form a layer and oriented. The twist orientational state may be implemented in a vertical, horizontal, or oblique orientational state. That is, the vertical twist orientational mode is a state where individual liquid crystal compounds are twisted along a spiral axis in a vertically oriented state to form a layer; the horizontal twist orientational mode is a state where individual liquid crystal compounds are twisted along a spiral axis in a horizontally oriented state to form a layer; and the oblique twist orientational mode is a state where individual liquid crystal compounds are twisted along a spiral axis in an obliquely oriented state to form a layer. According to the present application, the twist orientation state may be a twist orientation state of a horizontal orientation state.

In the twist orientation state, the ratio (d/p) of the thickness (d) to the pitch (p) of the liquid crystal layer may be 20 or less, and the lower limit may be 0.5 or more. When the ratio (d/p) of the thickness (d) to the pitch (p) in the twist orientation state is within the above range, the optical device may exhibit excellent light transmittance variable characteristics even in a state without any polarizer. In general, when the ratio d/p is 0.7 or more and less than 2.5, it may be called an STN (super twisted nematic) mode, and when the ratio d/p is 2.5 or more, it may be called an HTN (highly twisted nematic) driving mode.

The pitch (p) of the liquid crystal layer can be measured by a measurement method using a wedge cell, and specifically, can be measured by a method described in D. Podolskyy et al. Simple method for accurate measurements of the cholesteric pitch using a "stripe-wedge Grandjean-Cano cell (Liquid Crystals, Vol. 35, No. 7, July 2008, 789-791). The ratio (d/p) can be achieved by introducing an appropriate amount of a chiral dopant into the liquid crystal layer.

The liquid crystal layer may further comprise a chiral dopant, When the liquid crystal layer comprises a chiral agent, the twist orientation state may be implemented. The chiral agent (or chiral dopant) that can be included in the light crystal layer can be used without special limitation if it can induce a desired rotation (twisting) without deteriorating the liquid crystallinity, for example, the nematic regularity. The chiral agent for inducing rotation in the liquid crystal compound needs to include at least chirality in the molecular structure. The chiral agent may be exemplified by, for example, a compound having one or two or more asymmetric carbons, a compound having an asymmetric point on a heteroatom, such as a chiral amine or a chiral sulfoxide, or a compound having axially asymmetric and optically active sites such as cumulene or binaphthol. The chiral agent may be, for example, a low molecular weight compound having a molecular weight of 1,500 or less. As the chiral agent, commercially available chiral nematic liquid crystals, for example, chiral dopant liquid crystal S-811 commercially available from Merck Co., Ltd., or BASF's LC756 may also be used.

The application ratio of the chiral dopant is selected so that the desired ratio (d/p) can be achieved. In general, the content (wt%) of the chiral dopant may be calculated by an equation of 100/HTP (helical twisting power) × pitch (p) (nm). The HTP represents the strength of the twist of the chiral dopant, where the content of the chiral dopant may be determined in consideration of the desired pitch with reference to the above method.

The upper substrate of the liquid crystal cell may further comprise a first electrode layer (10b) between the first base layer (10a) and the pressure-sensitive adhesive layer (10c). The first electrode layer (10b) may contact the inner side surface of the first base layer (10a). The pressure-sensitive adhesive layer (10c) may contact the inner side surface of the first electrode layer (10b). The lower substrate of the liquid crystal cell may further comprise a second electrode layer (20b) between the second base layer (20a) and the spacers (20c). The second electrode layer (20b) may contact the inner side surface of the second base layer (20a). The spacers (20c) may contact the inner side surface of the second electrode layer (20b).

The first electrode layer and the second electrode layer may serve to provide application of an external action, for example, an electric field, so that the material included in the liquid crystal layer transmits or blocks incident light. In one example, the first electrode layer and/or the second electrode layer may comprise a conductive polymer, a conductive metal, a conductive nanowire, or a metal oxide such as ITO (indium tin oxide), and the like, but is not limited thereto. The first electrode layer and/or second electrode layer may be formed by, for example, depositing the conductive polymer, the conductive metal, the conductive nanowire, or the metal oxide such as ITO (indium tin oxide).

The lower substrate of the liquid crystal cell may further comprise an alignment film (20d). The alignment film (20d) may be present on the spacers (20c). That is, the top surface part and/or the side surface part of the spacers (20c) may contact the alignment film. A lower surface part of the spacers (20c) may contact the second electrode layer (20b). Since the pressure-sensitive adhesive layer included in the upper substrate may have liquid crystal orientation, the upper substrate may not comprise an alignment film. That is, the alignment film may not be included on the inner side surface of the first electrode layer (10b).

In this specification, the combination of the first base layer, the first electrode layer and the pressure-sensitive adhesive layer may be referred to as the upper substrate, and the combination of the second base layer, the second electrode layer, the spacer and the alignment film may be referred to as the lower substrate. In the liquid crystal cell, the upper substrate may not comprise a separate alignment film other than the pressure-sensitive adhesive layer, and the lower substrate may comprise the alignment film.

The alignment film and the liquid crystal layer may be in contact with each other. The alignment film may be a vertical alignment film or a horizontal alignment film. In this specification, the "horizontal alignment film" may mean a layer comprising an orientational material that imparts horizontal orientation force to a liquid crystal compound present in an adjacent liquid crystal layer. In this specification, the "vertical alignment film" may mean a layer comprising an orientational material that imparts vertical orientation force to a liquid crystal compound present in an adjacent liquid crystal layer. The adjacent liquid crystal compound may have a pretilt angle with respect to the vertical alignment film in the range of 80 degrees to 90 degrees, 85 degrees to 90 degrees, or about 87 degrees to 90 degrees, and the adjacent liquid crystal compound may have a pretilt angle with respect to the horizontal alignment film in the range of 0 degrees to 10 degrees, 0 degrees to 5 degrees or 0 degrees to 3 degrees. Unlike the pressure-sensitive adhesive layer, the alignment film may not have adhesive force for bonding the upper substrate and the lower substrate. In one example, the alignment film may have peel force close to zero regarding the first base layer in the state of the liquid crystal cell of Figure 2.

The alignment film may be a rubbing alignment film or a photo-alignment film. The orientation direction of the alignment film may be a rubbing direction in the case of a rubbing alignment film and a direction of polarized light to be irradiated in the case of a photo-alignment film, where such an orientation direction can be confirmed by a detection method using an absorption-type linear polarizer. Specifically, the orientation direction can be confirmed by disposing an absorption-type linear polarizer on one side of the liquid crystal layer in a state where the liquid crystal compound included in the liquid crystal layer is horizontally oriented, and measuring transmittance while rotating the polarizer at 360 degrees. When the side of the liquid crystal layer or the absorption-type linear polarizer is irradiated with light in the above state and simultaneously the luminance (transmittance) is measured from the other side, the transmittance tends to be low, if the absorption axis or transmission axis coincides with the orientation direction of the liquid crystal alignment film, where the orientation direction can be confirmed through simulation reflecting the refractive index anisotropy of the applied liquid crystal compound or the like. A method of confirming the orientation direction according to the mode of the liquid crystal layer is known, and in the present application, the orientation direction of the alignment film can be confirmed by such a known method.

The alignment film may comprise one or more selected from the group consisting of a material known to exhibit orientation ability by rubbing orientation such as a polyimide compound, a poly(vinyl alcohol) compound, a poly(amic acid) compound, a polystyrene compound, a polyamide compound and a polyoxyethylene compound, or a material known to exhibit orientation ability by light irradiation such as a polyimide compound, a polyamic acid compound, a polynorbornene compound, a phenylmaleimide copolymer compound, a polyvinylcinnamate compound, a polyazobenzene compound, a polyethyleneimide compound, a polyvinylalcohol compound, a polyamide compound, a polyethylene compound, a polystyrene compound, a polyphenylenephthalamide compound, a polyester compound, a CMPI (chloromethylated polyimide) compound, a PVCI (polyvinylcinnamate) compound and a polymethyl methacrylate compound, but is not limited thereto.

The spacer (20c) may maintain the gap between the upper substrate and the lower substrate. The liquid crystal layer may be present in a region where the spacer does not exist between the upper substrate and the lower substrate.

The spacer may be a patterned spacer. The spacer may have a column shape or a partition wall shape. In one example, the spacer may have a partition wall shape. When the spacer has a partition wall shape, it may be advantageous in terms of maintaining the height of the liquid crystal cell and improving physical rigidity of the liquid crystal cell. The partition wall may partition the space between the lower substrate and the upper substrate into two or more spaces. In the region where the spacer does not exist, other films or other layers present in the lower part may be exposed. For example, the second electrode layer may be exposed in a region where the spacer does not exist. The alignment film may cover the spacer and the second electrode layer exposed in the region where the spacer is not present. In the liquid crystal cell in which the upper substrate and the lower substrate are bonded together, the alignment film present on the spacer of the lower substrate and the pressure-sensitive adhesive layer of the upper substrate may be in contact with each other.

The liquid crystal compound and the above-described additives, for example, the dichroic dye, the chiral agent, and the like may be present in the region between the upper substrate and the lower substrate where the spacer does not exist. The shape of the spacer is not particularly limited, which can be applied without limitation to have, for example, a circle, an ellipse, or other polygonal-shaped polyhedrons.

The spacer may comprise a curable resin. The type of the curable resin is not particularly limited, where for example, a thermosetting resin or a photo-curable resin, for example, an ultraviolet curable resin may be used. As the thermosetting resin, for example, a silicone resin, a silicon resin, a fran resin, a polyurethane resin, an epoxy resin, an amino resin, a phenol resin, a urea resin, a polyester resin or a melamine resin, and the like may be used, without being limited thereto. As the ultraviolet curable resin, typically an acrylic polymer, for example, a polyester acrylate polymer, a polystyrene acrylate polymer, an epoxy acrylate polymer, a polyurethane acrylate polymer or a polybutadiene acrylate polymer, a silicone acrylate polymer or an alkyl acrylate polymer, and the like may be used, without being limited thereto.

The spacer may be formed by a patterning process. For example, the spacer may be formed by a photolithography process. The photolithography process may comprise a process of applying a curable resin composition on a base layer or an electrode layer and then irradiating it with ultraviolet rays via a pattern mask. The pattern mask may be patterned into an ultraviolet transmitting region and an ultraviolet blocking region. The photolithography process may further comprise a process of washing the curable resin composition irradiated with ultraviolet rays. The region irradiated with ultraviolet rays is cured, and the region irradiated with no ultraviolet rays remains in a liquid phase, so that it is removed through the washing process, whereby it can be patterned into a partition wall shape. In the photolithography process, a release treatment may be performed on the pattern mask in order to easily separate the resin composition and the pattern mask after ultraviolet irradiation, or a release paper may also be placed between the layer of the resin composition and the pattern mask.

The width (line width), spacing (pitch), thickness and area of the spacer may be appropriately selected within a range without impairing the purpose of the present application. For example, the width (line width) of the spacer may be in a range of 10µm to 500µm or in a range of 10µm to 50µm. The spacing (pitch) of the spacer may be in a range of 10µm to 1000µm or in a range of 100µm to 1000µm. The area of the spacer may be about 5% or more and may be 50% or less, relative to 100% of the total area of the second base layer. When the area of the spacer is within the above range, it may be advantageous to ensure excellent electro-optical properties while adequately securing attachment force between the upper substrate and the lower substrate. The thickness of the spacer may range, for example, from 1µm to 30µm or from 3µm to 20µm.

In order to overcome the physical limits of the liquid crystal cell, the outer substrates can be bonded together via the adhesive layers on both sides of the liquid crystal cell, but due to the low modulus of the pressure-sensitive adhesive layer, it is vulnerable to an external pressure, whereby defects such as cell gap collapse or liquid crystal flow or crowding may occur. The thicknesses of the adhesive layers included in the optical device are controlled, whereby the defects can be minimized and the structural stability and uniform appearance characteristics of the optical device can be secured.

As one example, the sum of the total thicknesses of the adhesive layers included in the optical device may be 200 µm or more. The sum of the total thicknesses of the adhesive layers may mean the sum of the thicknesses of all the adhesive layers included in the optical device, for example, the sum of the thicknesses of the first and second adhesive layers in the case of the structure of Figure 1, the sum of the thicknesses of the first, second, third and fourth adhesive layers in the case of the structure of Figures 2 and 4, or the sum of the thicknesses of the first, second, third, fourth, fifth and sixth adhesive layers in the case of the structure of Figure 3. When the total thickness of the adhesive layers is within the above range, it is possible to secure structural stability and uniform appearance characteristics of the optical device by minimizing defects in the bonding process of the outer substrates. The sum of the total thicknesses of the adhesive layers may be, specifically, 500 µm or more, 1,000 µm or more, 1,500 µm or more, or 2,000 µm or more. The sum of the total thicknesses of the adhesive layers may be, for example, about 6,000 µm or less, 5,000 µm or less, 4,000 µm or less, or 3,000 µm or less. If the total thickness of the adhesive layers is too thick, electro-optical properties such as transmittance characteristics of the optical device may be deteriorated, so that it may be advantageous that the total thickness is within the above range.

The first to sixth adhesive layers may each have a single-layer structure of one adhesive layer, or may be a laminate of two or more sub-adhesive layers. The thickness and number of sub-adhesive layers may be controlled in consideration of the desired thickness of the adhesive layer. In one example, the thickness of the single-layered adhesive layer or sub-adhesive layer may be in the range of 100µm to 500µm or the range of 300µm to 400µm.

As one example, the first to sixth adhesive layers may each have a Young's modulus (E) in a range of 0.1 MPa to 100 MPa. As another example, the Young's modulus (E) of the first to sixth adhesive layers may be 0.2 MPa or more, 0.4 MPa or more, 0.6 MPa or more, 0.8 MPa or more, 1 MPa or more, 5 MPa or more, or about 10 MPa or more, and may be about 95 MPa or less, 80 MPa or less, 75 MPa or less, 70 MPa or less, 65 MPa or less, 60 MPa or less, 55 MPa or less, or about 50 MPa or less. The Young's modulus (E), for example, can be measured in the manner specified in ASTM D882, and can be measured using the equipment that can cut the film in the form provided by the relevant standard and measure the stress-strain curve (can measure the force and length simultaneously), for example, a UTM (universal testing machine). When the Young's moduli of the adhesive layers included in the optical device are within the above range, it may be more advantageous to ensure excellent durability of the optical device. When the adhesive layer is a laminate of at least two or more sub-adhesive layers, each of the sub-adhesive layers may satisfy the above Young's modulus range.

As one example, the first to sixth adhesive layers may each have a coefficient of thermal expansion of 2,000 ppm/K or less. In another example, the coefficient of thermal expansion may be about 1,900 ppm/K or less, 1,700 ppm/K or less, 1,600 ppm/K or less, or about 1.500 ppm/K or less, or may be about 10 ppm/K or more, 20 ppm/K or more, 30 ppm/K or more, 40 ppm/K or more, 50 ppm/K or more, 60 ppm/K or more, 70 ppm/K or more, 80 ppm/K or more, 90 ppm/K or more, 100 ppm/K or more, 200 ppm/K or more, 300 ppm/K or more, 400 ppm/K or more, 500 ppm/K or more, 600 ppm/K or more, 700 ppm/K or more, or about 800 ppm/K or more. The coefficient of thermal expansion of the adhesive layer can be measured, for example, according to the regulations of ASTM D696, where the coefficient of thermal expansion can be calculated by cutting it in the form provided by the relevant standard, and measuring the change in length per unit temperature, and can be measured by a known method such as the TMA (thermo-mechanic analysis). When the coefficients of thermal expansion of the adhesive layers included in the optical device are within the above range, it may be more advantageous to ensure excellent durability of the optical device. When the adhesive layer is a laminate of at least two or more sub-adhesive layers, each of the sub-adhesive layers may satisfy the range of the coefficient of thermal expansion.

The first to sixth adhesive layers may each be a thermoplastic polyurethane (TPU) adhesive layer, a polyamide adhesive layer, a polyester adhesive layer, an EVA (ethylene vinyl acetate) adhesive layer, an acrylic adhesive layer, a silicone adhesive layer or a polyolefin adhesive layer. According to one example of the present application, the at least one or more adhesive layers may each be a thermoplastic polyurethane.

The optical device may further comprise an outer layer surrounding the side surfaces of the liquid crystal cell. Figure 1 exemplarily shows an optical device comprising the outer layer (600). In the optical device, the top area of the liquid crystal cell may be smaller than the top area of the first outer substrate or the second outer substrate. Also, the top area of the liquid crystal cell may be smaller than the top areas of the first to sixth adhesive layers included in the optical device. In one example, the liquid crystal cell may be encapsulated by the first adhesive layer positioned between the first outer substrate and the first polarizer, the second adhesive layer positioned between the second outer substrate and the second polarizer, and the outer layer. In the present application, the term encapsulation may mean covering the entire surface of the liquid crystal cell with the adhesive layers and the outer layer. In one example, when another layer does not exist between the first adhesive layer and the second adhesive layer, the first adhesive layer and the second adhesive layer may directly contact the liquid crystal cell. In another example, when another layer exists between the first adhesive layer and the second adhesive layer, the liquid crystal cell may directly contact another layer. According to the structure of Figure 1, the upper surface of the liquid crystal cell may contact the first buffer layer (301), the lower surface may contact the second buffer layer (302), and the side surface may contact the outer layer (600). Depending on the desired structure, it is possible to implement the encapsulation structure, for example, by a method of compressing a laminate comprising a first outer substrate, a first adhesive layer, a first polarizer, a liquid crystal cell, a second polarizer, a second adhesive layer, and a second outer substrate sequentially, and an outer layer surrounding the side surfaces of the liquid crystal cell in a vacuum state. Durability and weather resistance of the optical device are greatly improved by such an encapsulation structure, and as a result, it can be stably applied to outdoor applications such as sunroofs.

The outer layer may comprise, for example, a thermoplastic polyurethane (TPU) adhesive, a polyamide adhesive, a polyester adhesive, an EVA (ethylene vinyl acetate) adhesive, an acrylic adhesive, a silicone adhesive, or a polyolefin adhesive. In one example, the outer layer may be formed of the same material as that of the adhesive layers.

The present application also relates to a method for manufacturing an optical device. The manufacturing method of the optical device may comprise steps of preparing a laminate sequentially comprising a first outer substrate, a first adhesive layer, a first polarizer, a liquid crystal cell, a second polarizer, a second adhesive layer, and a second outer substrate, and further comprising a first buffer layer positioned between the first base layer and the first outer substrate, and performing an autoclave treatment on the laminate. Unless otherwise specified in the manufacturing method of the optical device, the contents described in the optical device may be equally applied.

The laminate may further comprise an outer layer surrounding the side surfaces of the liquid crystal cell.

When the optical device further comprises other elements in addition to the liquid crystal cell and the polarizer, the laminate may further comprise other elements in addition to the liquid crystal cell and the polarizer at a desired location.

The autoclave process may be performed by heating and/or pressurizing the laminate formed after the laminating step.

The conditions of the autoclave process are not particularly limited, and it may be performed under an appropriate temperature and pressure, for example, depending on the type of the applied adhesive layers. The temperature of a typical autoclave process is about 80°C or more, 90°C or more, 100°C or more, and the pressure is 2 atm or more, without being limited thereto. The upper limit of the process temperature may be about 200°C or less, 190°C or less, 180°C or less, or 170°C or less or so, and the upper limit of the process pressure may be about 10 atm or less, 9 atm or less, 8 atm or less, 7 atm or less, or 6 atm or less or so.

Such an optical device can be used for various applications, and for example, can be used for eyewear such as sunglasses or AR (augmented reality) or VR (virtual reality) eyewear, an outer wall of a building or a sunroof for a vehicle, and the like. In one example, the optical device itself may be a sunroof for a vehicle. For example, in an automobile including an auto body in which at least one opening is formed, the optical device or the sunroof for a vehicle attached to the opening can be mounted and used.

### [Effects of Invention]

The optical device of the present application can properly maintain a cell gap of a liquid crystal cell, have excellent adhesion between an upper substrate and a lower substrate, and solve light leakage due to misalignment of liquid crystals occurring upon external impacts.

### [Brief Description of Drawings]

Figure 1 exemplarily shows an optical device of a first example of the present application.
Figure 2 exemplarily shows an optical device of a second example of the present application.
Figure 3 exemplarily shows an optical device of a third example of the present application.
Figure 4 exemplarily shows an optical device of a fourth example of the present application.
Figure 5 exemplarily shows a liquid crystal cell of the present application.
Figure 6 exemplarily shows an optical device of Comparative Example 1.
Figures 7A to 7E show loss elastic moduli of the pressure-sensitive adhesive layer, the buffer layer, and the adhesive layer used in Examples and Comparative Example for each frequency.
Figures 8A to 8E show storage elastic moduli of the pressure-sensitive adhesive layer, the buffer layer, and the adhesive layer used in Examples and Comparative Example for each frequency.

### [Mode for Invention]

Hereinafter, the present application is specifically described through the following examples, but the scope of the present application is not limited by the following examples.

### Measurement Example 1. Measurement of storage elastic modulus and loss elastic modulus

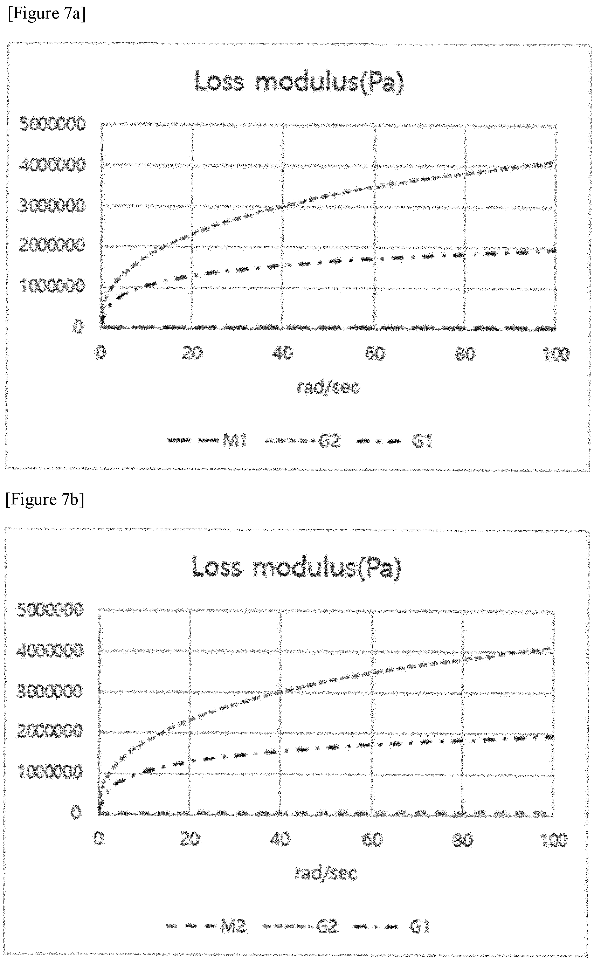

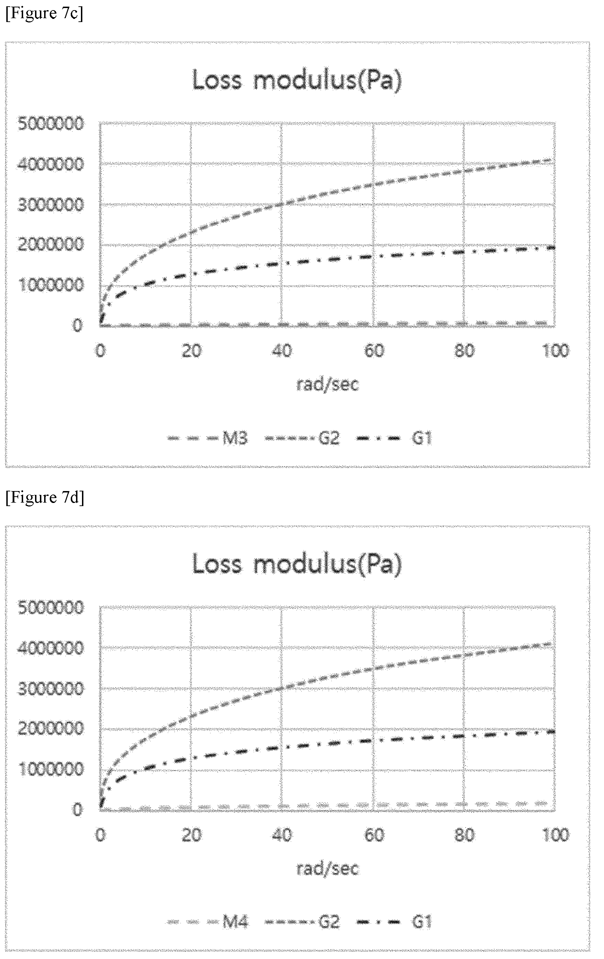

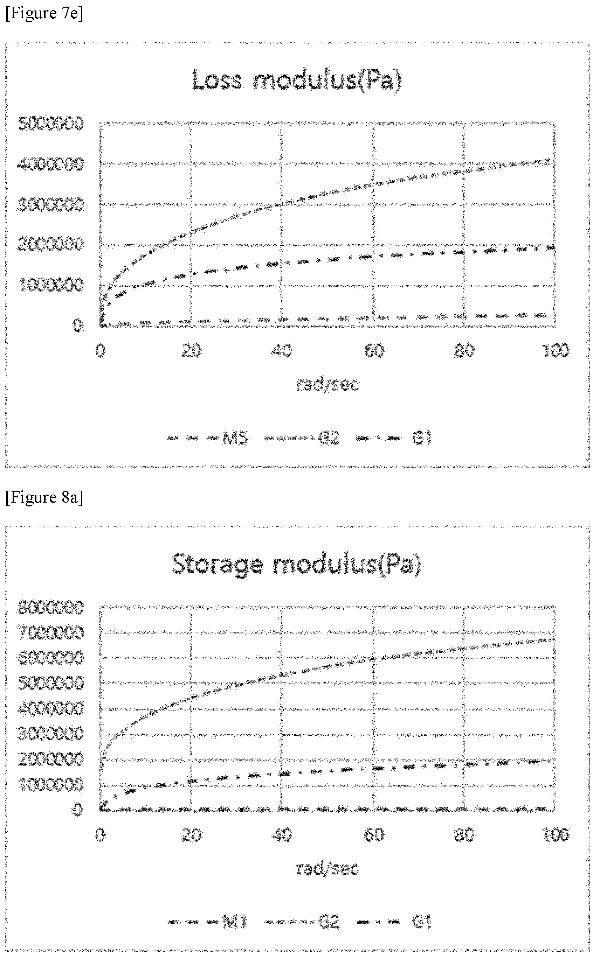

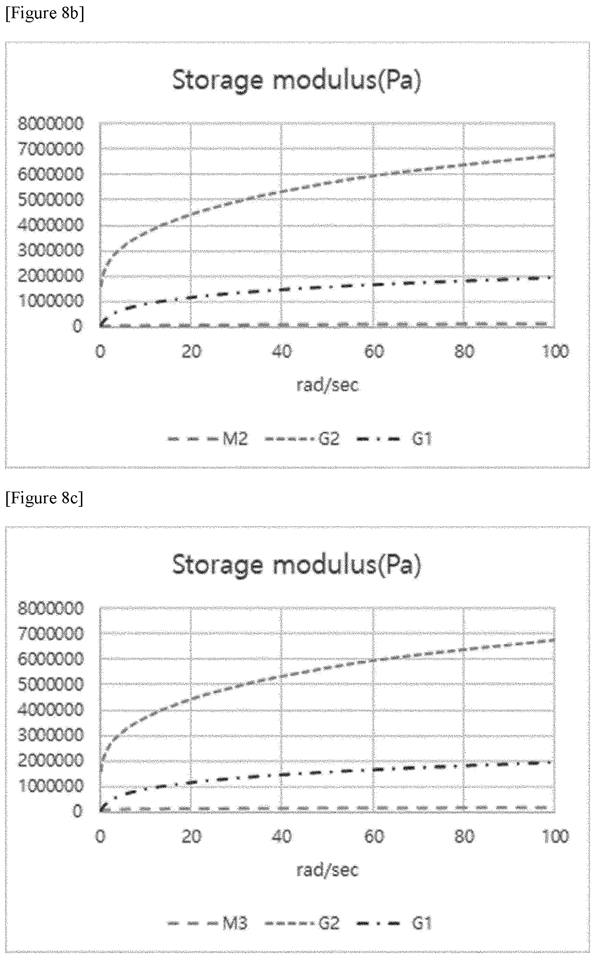

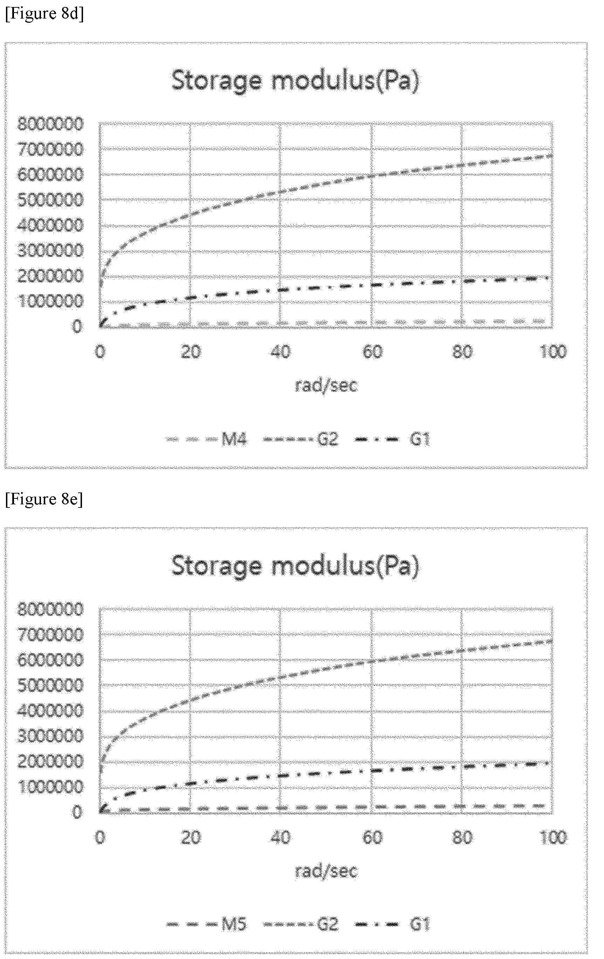

The storage elastic modulus and loss elastic modulus were measured using TA's ARES G2, Rheometer. Specifically, the pressure-sensitive adhesive layer, the adhesive layer, and the buffer layer used in Examples and Comparative Examples were prepared as circular samples (diameter: 8 mm, thickness: 600 µm), respectively. For the circular samples, the axial force was set to be 50 gf (vertical force) at a temperature of 25°C using an ARES G2 parallel plate (Al Plate), and then the loss elastic moduli and the storage elastic moduli were measured while the frequency was changed from 0.6 rad/s to 100 rad/s under a strain condition of 5% (Frequency Sweep), and the results were shown in Figures 7a to 7e, and Figures 8a to 8e, respectively. In addition, the loss elastic modulus values and storage elastic modulus values at 1 Hz and 10 Hz were described in Table 1. In the measurement equipment, both the elastic modulus values for the rad/sec frequency and the elastic modulus values for the Hz frequency can be obtained, where on the numerical values of the measuring equipment, 1Hz is about 6.30957 rad/sec, and 10 Hz is about 63.0957 rad/sec.

### Example 1.

### Manufacture of liquid crystal cell

As a first base layer, a polycarbonate film (Keiwa) having a thickness of about 100µm and a width × height area of 300mm × 300mm was prepared. A first electrode layer was formed by depositing ITO (indium-tin-oxide) to a thickness of 50nm on the first base layer. A pressure-sensitive adhesive composition (KR-3700, Shin-Etsu) was bar-coated on the first electrode layer, and then dried at about 150°C for about 5 minutes to form a pressure-sensitive adhesive layer having a thickness of about 10 µm. The loss elastic modulus of the pressure-sensitive adhesive layer at a frequency of 1 Hz was 906,687 Pa. The combination of the first base layer, the first electrode layer and the pressure-sensitive adhesive layer is referred to as an upper substrate.

As a second base layer, a polycarbonate film (Keiwa) having a thickness of about 100µm and a width × height area of 300mm × 300mm was prepared. A second electrode layer was formed by depositing ITO (indium-tin-oxide) to a thickness of 50nm on the second base layer. An acrylic resin composition (KAD-03, Minutatec) was coated on the second electrode layer, and then honeycomb spacers were formed by a photolithography method. The regular hexagon (closed island shape) constituting a honeycomb has a pitch of about 350 µm, a height of about 6 µm, and a line width of about 30 µm. A vertical alignment film (Nissan, 5661) was coated to a thickness of about 300 nm on the spacers, and then rubbed in one direction. The combination of the second base layer, the second electrode layer, the spacers, and the vertical alignment film is referred to as a lower substrate.

A liquid crystal composition was coated on the vertical alignment film of the lower substrate to form a liquid crystal layer, and then a liquid crystal cell was prepared by laminating the pressure-sensitive adhesive layer of the upper substrate to face the coated surface of the liquid crystal composition. The liquid crystal composition comprised a liquid crystal compound (JNC, SHN-5011XX) and a chiral dopant (HCCH, S811), and the pitch (p) of the liquid crystal layer was about 20µm. The liquid crystal cell is an RTN mode liquid crystal cell in an initial vertical orientation state.

### Optical device manufacturing

A laminate comprising a first outer substrate, a first adhesive layer, a first polarizer, a first buffer layer, the prepared liquid crystal cell, a second buffer layer, a second polarizer, a second adhesive layer, and a second outer substrate sequentially, and comprising an outer layer surrounding the side surfaces of the liquid crystal cell was prepared. Compared to the first outer substrate, the second outer substrate was disposed in the gravitational force direction.

As each of the first outer substrate and the second outer substrate, a flat glass having a thickness of about 3mm and an area of width × length = 350mm × 350mm was used. The first adhesive layer, the second adhesive layer, and the outer layer each used one layer of TPU layer (Argotec) having a thickness of 380µm. The loss elastic modulus of the TPU layer (Argotec) at a frequency of 1Hz was 1,485,510 Pa. As each of the first buffer layer and the second buffer layer, an OCA (Optical Clear Adhesive) layer M1 having a thickness of 500µm and a loss elastic modulus of 9,696 Pa at a frequency of 1Hz was used.

An optical device having the structure of Figure 1 was manufactured by performing an autoclave process on the laminate at a temperature of about 110°C and a pressure of about 2 atm.

### Example 2

An optical device was manufactured in the same method as in Example 1, except that in Example 1, an OCA layer M2 having a thickness of 500µm and a loss elastic modulus of 17,340 Pa at a frequency of 1Hz was used as each of the first buffer layer and the second buffer layer.

### Example 3

An optical device was manufactured in the same method as in Example 1, except that in Example 1, an OCA layer M3 having a thickness of 500µm and a loss elastic modulus of 23,434 Pa at a frequency of 1Hz was used as each of the first buffer layer and the second buffer layer.

### Example 4

An optical device was manufactured in the same method as in Example 1, except that in Example 1, an OCA layer M4 having a thickness of 500µm and a loss elastic modulus of 46,158 Pa at a frequency of 1Hz was used as each of the first buffer layer and the second buffer layer.

### Example 5

An optical device was manufactured in the same method as in Example 1, except that in Example 1, an OCA layer M5 having a thickness of 500µm and a loss elastic modulus of 56,571 Pa at a frequency of 1Hz was used as each of the first buffer layer and the second buffer layer.

### Example 6

A liquid crystal cell was prepared in the same method as in Example 1.

A laminate comprising a first outer substrate, a first adhesive layer, a first buffer layer, a first polarizer, a third adhesive layer, the prepared liquid crystal cell, a fourth adhesive layer, a second polarizer, a second buffer layer, a second adhesive layer, and a second outer substrates sequentially was prepared. Compared to the first outer substrate, the second outer substrate was disposed in the gravitational force direction.

As the first outer substrate and the second outer substrate, the same ones as those of Example 1 were used.

As the first, second, third and fourth adhesive layers, the same ones as the first and second adhesive layers of Example 1 were used.

As the first buffer layer and the second buffer layer, the same OCA layer M2 as those of Example 2 was used at a thickness of 500µm. The first buffer layer and the second buffer layer were formed by laminating the pressure-sensitive adhesive layer on the outside of the first polarizer and the outside of the second polarizer, respectively.

An optical device having the structure of Figure 2 was manufactured by performing an autoclave process on the laminate at a temperature of about 110°C and a pressure of about 2 atm.

### Example 7

An optical device was manufactured in the same method as in Example 6, except that in Example 6, an OCA layer M2 having a thickness of 400µm was used as each of the first buffer layer and the second buffer layer.

### Example 8

An optical device was manufactured in the same method as in Example 6, except that in Example 6, an OCA layer M2 having a thickness of 300µm was used as each of the first buffer layer and the second buffer layer.

### Example 9

An optical device was manufactured in the same method as in Example 6, except that in Example 6, an OCA layer M2 having a thickness of 200µm was used as each of the first buffer layer and the second buffer layer.

### Example 10

An optical device was manufactured in the same method as in Example 6, except that in Example 6, an OCA layer M2 having a thickness of 100µm was used as each of the first buffer layer and the second buffer layer.

### Example 11

A liquid crystal cell was prepared in the same method as in Example 1.

A laminate comprising a first outer substrate, a first adhesive layer, a first buffer layer, a fifth adhesive layer, a first polarizer, a third adhesive layer, the prepared liquid crystal cell, a fourth adhesive layer, a second polarizer, a sixth adhesive layer, a second buffer layer, a second adhesive layer, and a second outer substrates sequentially was prepared. Compared to the first outer substrate, the second outer substrate was disposed in the gravitational force direction.

As the first outer substrate and the second outer substrate, the same ones as those of Example 1 were used.

As each of the first, second, third, fourth, fifth and sixth adhesive layers, the same ones as the first and second adhesive layers of Example 1 were used.

As the first buffer layer and the second buffer layer, the same OCA layer M3 as those of Example 3 was used at a thickness of 500µm. The first buffer layer and the second buffer layer were formed by laminating the pressure-sensitive adhesive layer on the inside of the first adhesive layer and the inside of the second adhesive layer, respectively.

An optical device having the structure of Figure 3 was manufactured by performing an autoclave process on the laminate at a temperature of about 110°C and a pressure of about 2 atm.

### Example 12

A liquid crystal cell was prepared in the same method as in Example 1.

A laminate comprising a first outer substrate, a first adhesive layer, a first buffer layer, a first polarizer, a third adhesive layer, the prepared liquid crystal cell, a fourth adhesive layer, a second polarizer, a second adhesive layer, and a second outer substrates sequentially was prepared. Compared to the first outer substrate, the second outer substrate was disposed in the gravitational force direction.

As the first outer substrate and the second outer substrate, the same ones as those of Example 1 were used.

As each of the first, second, third and fourth adhesive layers, the same ones as the first and second adhesive layers of Example 1 were used. As the first buffer layer, the same OCA layer M3 as that of Example 3 was used at a thickness of 500µm. The first buffer layer was formed by laminating the pressure-sensitive adhesive layer on the outside of the first polarizer.

An optical device having the structure of Figure 4 was manufactured by performing an autoclave process on the laminate at a temperature of about 110°C and a pressure of about 2 atm.

### Comparative Example 1

A liquid crystal cell was prepared in the same method as in Example 1.

A laminate comprising a first outer substrate, a first adhesive layer, a first polarizer, a third adhesive layer, the prepared liquid crystal cell, a fourth adhesive layer, a second polarizer, a second adhesive layer, and a second outer substrate sequentially, and comprising an outer layer surrounding the side surfaces of the liquid crystal cell was prepared. Compared to the first outer substrate, the second outer substrate was disposed in the gravitational force direction. Comparative Example 1 does not include the first and second buffer layers.

As the first outer substrate and the second outer substrate, the same ones as those of Example 1 were used.

As each of the first and second adhesive layers, one laminating a TPU layer (Argotec) having a loss elastic modulus of 1,485,510 Pa at a frequency of 1 Hz and a thickness of 380µm in three layers was used. As each of the third and fourth adhesive layers, one layer of the TPU (Argotec) having a loss elastic modulus of 1,485,510 Pa at a frequency of 1 Hz and a thickness of 380µm was used. The TPU layer was also used as the outer layer.

An optical device having the structure of Figure 6 was manufactured by performing an autoclave process on the laminate at a temperature of about 110°C and a pressure of about 2 atm.

### Evaluation Example 1. Flicker amount measurement

Flicker amounts were measured for the optical devices of Examples 1 to 12 and Comparative Example 1 to evaluate light leakage, and the results were described in Table 1 below. After placing the optical device on a back light, the flicker amount was measured using CA-310 (Konica MINOLTA's luminance meter). The flicker amount was measured by reading the maximum value of transmittance changes while applying pressures at a cycle of 300 g and 2Hz using MIK21's K-9205 equipment. It means that the smaller the flicker amount, the smaller the luminance change. In addition, Table 1 below shows values of the storage elastic moduli and loss elastic moduli of the pressure-sensitive adhesive layers (G1), the adhesive layers (G2), and the buffer layers (G3) of Examples 1 to 12 and Comparative Example 1. It can be confirmed that Examples 1 to 12 show low flicker amounts compared to Comparative Example 1.

**[Table 1]**

| | | Structure | Type of buffer layer | Thickness of buffer layer (µm) | Storage elastic modulus | | Loss elastic modulus | | Flicker amount |
|---|---|---|---|---|---|---|---|---|---|
| | | | | | 1 Hz (Pa) | 10 Hz (Pa) | 1 Hz (Pa) | 10 Hz (Pa) | |
| Pressure-sensitive adhesive layer G1 | | - | - | - | 754,500 | 1,675,550 | 906,687 | 1,758,860 | - |
| Adhesive layer G2 | | - | - | - | 3,357,730 | 6,026,160 | 1,485,510 | 3,572,320 | - |
| Buffer layer G3 | Example 1 | Fig.1 | M1 | 500 | 50,529 | 66,592 | 9,696 | 18,516 | 10 |
| | Example 2 | Fig.1 | M2 | 500 | 47,321 | 81,368 | 17,340 | 52,562 | 39 |
| | Example 3 | Fig.1 | M3 | 500 | 91,702 | 136,496 | 23,434 | 63,011 | 54 |
| | Example 4 | Fig.1 | M4 | 500 | 85,669 | 175,953 | 46,158 | 139,368 | 95 |
| | Example 5 | Fig.1 | M5 | 500 | 112,736 | 229,298 | 56,571 | 203,589 | 145 |
| | Example 6 | Fig.2 | M2 | 500 | 47,321 | 81,368 | 17,340 | 52,562 | 37 |
| Example 7 | Fig.2 | M2 | 400 | 47,321 | 81,368 | 17,340 | 52,562 | 42 | |
| Example 8 | Fig.2 | M2 | 300 | 47,321 | 81,368 | 17,340 | 52,562 | 45 | |
| Example 9 | Fig.2 | M2 | 200 | 47,321 | 81,368 | 17,340 | 52,562 | 49 | |
| Example 10 | Fig.2 | M2 | 100 | 47,321 | 81,368 | 17,340 | 52,562 | 73 | |
| Example 11 | Fig.3 | M3 | 500 | 91,702 | 136,496 | 23,434 | 63,011 | 60 | |
| Example 12 | Fig.4 | M3 | 500 | 91,702 | 136,496 | 23,434 | 63,011 | 80 | |
| Comparative Example 1 | - | - | | - | - | - | - | 178 | |

### [Explanation of Reference Numerals]

101: first outer substrate, 102: second outer substrate, 200: liquid crystal cell, 301: first buffer layer, 302: second buffer layer, 401: first adhesive layer, 402: second adhesive layer, 403: third adhesive layer; 404: fourth adhesive layer, 405: fifth adhesive layer, 406: sixth adhesive layer, 501: first polarizer, 502: second polarizer, 600: outer layer, 10a: first base layer, 10b: first electrode layer, 10c: pressure-sensitive adhesive layer, 20a: second base layer, 20b: second electrode layer, 20c: spacer, 20d: alignment film, 30: liquid crystal layer

## Claims

1. An optical device sequentially comprising a first outer substrate (101), a first adhesive layer (401) in contact with the inner side surface of the first outer substrate (101), a liquid crystal cell (200), a second adhesive layer (402) in contact with the inner side surface of a second outer substrate (102), and the second outer substrate (102), wherein
the liquid crystal cell (200) comprises an upper substrate including a first base layer (10a) and a pressure-sensitive adhesive layer (10c); a lower substrate including a second base layer (20a) and spacers (20c); and a liquid crystal layer (30) including a liquid crystal compound between the upper substrate and the lower substrate, and
the first base layer (10a) is disposed closer to the first outer substrate (101) than the second base layer (20a), and
further comprising a first buffer layer (301) positioned between the first base layer (10a) and the first outer substrate (101),
wherein the loss elastic modulus of the first adhesive layer (401) and the loss elastic modulus of the second adhesive layer (402) are each higher than the loss elastic modulus of the pressure-sensitive adhesive layer (10c).

2. The optical device according to claim 1, wherein each of the first outer substrate (101) and the second outer substrate (102) is a glass substrate.

3. The optical device according to claim 1, wherein the pressure-sensitive adhesive layer (10c) has a loss elastic modulus at a temperature of 25°C and a frequency of 1Hz in a range of 50,000 Pa to 2 MPa.

4. The optical device according to claim 1, wherein the first buffer layer (301) has a loss elastic modulus at a temperature of 25°C and a frequency of 1Hz in a range of 1,000 Pa to 500,000 Pa.

5. The optical device according to claim 1, wherein the first adhesive layer (401) and the second adhesive layer (402) each have a loss elastic modulus at a temperature of 25°C and a frequency of 1Hz in a range of 1 MPa to 100 MPa.

6. The optical device according to claim 1, wherein the first buffer layer (301) is in contact with the outer side surface of the first base layer (10a) or in contact with the inner side surface of the first adhesive layer (401).

7. The optical device according to claim 1, further comprising a third adhesive layer (403) in contact with the outer side surface of the first base layer (10a), and a fourth adhesive layer (404) in contact with the outer side surface of the second base layer (20a).

8. The optical device according to claim 1, further comprising a first polarizer (501) positioned between the first outer substrate (101) and the liquid crystal cell (200), and a second polarizer (502) positioned between the second outer substrate (102) and the liquid crystal cell (200).

9. The optical device according to claim 8, further comprising a fifth adhesive layer (405) in contact with the outer side surface of the first polarizer (501), and a sixth adhesive layer (406) in contact with the outer side surface of the second polarizer (502).

10. The optical device according to claim 1, further comprising a second buffer layer (302) positioned between the second base layer (20a) and the second outer substrate (102).

11. The optical device according to claim 1, wherein the liquid crystal layer (30) exists in a vertical orientation state when no voltage is applied, and exists in a twist orientation state when a voltage is applied.

12. The optical device according to claim 1, wherein the upper substrate further comprises a first electrode layer (10b) between the first base layer (10a) and the pressure-sensitive adhesive layer (10c), and the lower substrate further comprises a second electrode layer (20b) between the second base layer (20a) and the spacers (20c).

13. The optical device according to claim 12, wherein the upper substrate comprises no alignment film (20d), and the lower substrate further comprises an alignment film (20d).

14. An automobile comprising an auto body in which one or more openings are formed; and the optical device of claim 1 mounted in the openings.

## Patentansprüche

1. Optische Vorrichtung, die nacheinander ein erstes äußeres Substrat (101), eine erste Klebeschicht (401) in Kontakt mit der inneren Seitenfläche des ersten äußeren Substrats (101), eine Flüssigkristallzelle (200), eine zweite Klebeschicht (402) in Kontakt mit der inneren Seitenfläche eines zweiten äußeren Substrats (102) und das zweite äußere Substrat (102) umfasst, wobei
die Flüssigkristallzelle (200) ein oberes Substrat, das eine erste Basisschicht (10a) und eine druckempfindliche Klebeschicht (10c) umfasst; ein unteres Substrat, das eine zweite Basisschicht (20a) und Abstandshalter (20c) umfasst; und eine Flüssigkristallschicht (30), die eine Flüssigkristallverbindung zwischen dem oberen Substrat und dem unteren Substrat umfasst, umfasst, und
die erste Basisschicht (10a) näher an dem ersten äußeren Substrat (101) angeordnet ist als die zweite Basisschicht (20a), und
ferner eine erste Pufferschicht (301) umfasst, die zwischen der ersten Basisschicht (10a) und dem ersten äußeren Substrat (101) positioniert ist,
wobei der Verlustelastizitätsmodul der ersten Klebeschicht (401) und der Verlustelastizitätsmodul der zweiten Klebeschicht (402) jeweils höher sind als der Verlustelastizitätsmodul der druckempfindlichen Klebeschicht (10c).

2. Optische Vorrichtung nach Anspruch 1, wobei jedes von dem ersten äußeren Substrat (101) und dem zweiten äußeren Substrat (102) ein Glassubstrat ist.

3. Optische Vorrichtung nach Anspruch 1, wobei die druckempfindliche Klebeschicht (10c) einen Verlustelastizitätsmodul bei einer Temperatur von 25 °C und einer Frequenz von 1 Hz in einem Bereich von 50.000 Pa bis 2 MPa aufweist.

4. Optische Vorrichtung nach Anspruch 1, wobei die erste Pufferschicht (301) einen Verlustelastizitätsmodul bei einer Temperatur von 25 °C und einer Frequenz von 1 Hz in einem Bereich von 1.000 Pa bis 500.000 Pa aufweist.

5. Optische Vorrichtung nach Anspruch 1, wobei die erste Klebeschicht (401) und die zweite Klebeschicht (402) jeweils einen Verlustelastizitätsmodul bei einer Temperatur von 25 °C und einer Frequenz von 1 Hz in einem Bereich von 1 MPa bis 100 MPa aufweisen.

6. Optische Vorrichtung nach Anspruch 1, wobei die erste Pufferschicht (301) in Kontakt mit der äußeren Seitenfläche der ersten Basisschicht (10a) oder in Kontakt mit der inneren Seitenfläche der ersten Klebeschicht (401) ist.

7. Optische Vorrichtung nach Anspruch 1, ferner eine dritte Klebeschicht (403) in Kontakt mit der äußeren Seitenfläche der ersten Basisschicht (10a) und eine vierte Klebeschicht (404) in Kontakt mit der äußeren Seitenfläche der zweiten Basisschicht (20a) umfassend.

8. Optische Vorrichtung nach Anspruch 1, ferner einen ersten Polarisator (501), der zwischen dem ersten äußeren Substrat (101) und der Flüssigkristallzelle (200) positioniert ist, und einen zweiten Polarisator (502), der zwischen dem zweiten äußeren Substrat (102) und der Flüssigkristallzelle (200) positioniert ist, umfassend.

9. Optische Vorrichtung nach Anspruch 8, ferner eine fünfte Klebeschicht (405) in Kontakt mit der äußeren Seitenfläche des ersten Polarisators (501) und eine sechste Klebeschicht (406) in Kontakt mit der äußeren Seitenfläche des zweiten Polarisators (502) umfassend.

10. Optische Vorrichtung nach Anspruch 1, ferner eine zweite Pufferschicht (302) umfassend, die zwischen der zweiten Basisschicht (20a) und dem zweiten äußeren Substrat (102) positioniert ist.

11. Optische Vorrichtung nach Anspruch 1, wobei die Flüssigkristallschicht (30) in einem vertikalen Orientierungszustand vorliegt, wenn keine Spannung angelegt wird, und in einem verdrillten Orientierungszustand vorliegt, wenn eine Spannung angelegt wird.

12. Optische Vorrichtung nach Anspruch 1, wobei das obere Substrat ferner eine erste Elektrodenschicht (10b) zwischen der ersten Basisschicht (10a) und der druckempfindlichen Klebeschicht (10c) umfasst und das untere Substrat ferner eine zweite Elektrodenschicht (20b) zwischen der zweiten Basisschicht (20a) und den Abstandshaltern (20c) umfasst.

13. Optische Vorrichtung nach Anspruch 12, wobei das obere Substrat keinen Ausrichtungsfilm (20d) umfasst und das untere Substrat ferner einen Ausrichtungsfilm (20d) umfasst.

14. Automobil, umfassend eine Automobilkarosserie, in der eine oder mehrere Öffnungen ausgebildet sind; und die optische Vorrichtung nach Anspruch 1, die in den Öffnungen montiert ist.

## Revendications

1. Dispositif optique comprenant en séquence un premier substrat externe (101), une première couche adhésive (401) en contact avec la surface latérale interne du premier substrat externe (101), une cellule à cristaux liquides (200), une deuxième couche adhésive (402) en contact avec la surface latérale interne d'un deuxième substrat externe (102), et le deuxième substrat externe (102), dans lequel
la cellule à cristaux liquides (200) comprend un substrat supérieur comprenant une première couche de base (10a) et une couche adhésive sensible à la pression (10c) ; un substrat inférieur comprenant une deuxième couche de base (20a) et des pièces d'écartement (20c) ; et une couche de cristaux liquides (30) comprenant un composé à cristaux liquides entre le substrat supérieur et le substrat inférieur, et
la première couche de base (10a) est placée plus près du premier substrat externe (101) que la deuxième couche de base (20a), et
comprenant en outre une première couche tampon (301) positionnée entre la première couche de base (10a) et le premier substrat externe (101),
dans lequel le module d'élasticité de perte de la première couche adhésive (401) et le module d'élasticité de perte de la deuxième couche adhésive (402) sont chacun plus élevés que le module d'élasticité de perte de la couche adhésive sensible à la pression (10c).

2. Dispositif optique selon la revendication 1, dans lequel chacun du premier substrat externe (101) et du deuxième substrat externe (102) est un substrat en verre.

3. Dispositif optique selon la revendication 1, dans lequel la couche adhésive sensible à la pression (10c) a un module d'élasticité de perte à une température de 25 °C et à une fréquence de 1 Hz dans une plage de 50.000 Pa à 2 MPa.

4. Dispositif optique selon la revendication 1, dans lequel la première couche tampon (301) a un module d'élasticité de perte à une température de 25 °C et à une fréquence de 1 Hz dans une plage de 1.000 Pa à 500.000 Pa.

5. Dispositif optique selon la revendication 1, dans lequel la première couche adhésive (401) et la deuxième couche adhésive (402) ont chacune un module d'élasticité de perte à une température de 25 °C et à une fréquence de 1 Hz dans une plage de 1 MPa à 100 MPa.

6. Dispositif optique selon la revendication 1, dans lequel la première couche tampon (301) est en contact avec la surface latérale externe de la première couche de base (10a) ou en contact avec la surface latérale interne de la première couche adhésive (401).

7. Dispositif optique selon la revendication 1, comprenant en outre une troisième couche adhésive (403) en contact avec la surface latérale externe de la première couche de base (10a), et une quatrième couche adhésive (404) en contact avec la surface latérale externe de la deuxième couche de base (20a).

8. Dispositif optique selon la revendication 1, comprenant en outre un premier polariseur (501) positionné entre le premier substrat externe (101) et la cellule à cristaux liquides (200), et un deuxième polariseur (502) positionné entre le deuxième substrat externe (102) et la cellule à cristaux liquides (200).

9. Dispositif optique selon la revendication 8, comprenant en outre une cinquième couche adhésive (405) en contact avec la surface latérale externe du premier polariseur (501), et une sixième couche adhésive (406) en contact avec la surface latérale externe du deuxième polariseur (502).

10. Dispositif optique selon la revendication 1, comprenant en outre une deuxième couche tampon (302) positionnée entre la deuxième couche de base (20a) et le deuxième substrat externe (102).

11. Dispositif optique selon la revendication 1, dans lequel la couche de cristaux liquides (30) existe dans un état d'orientation verticale lorsqu'aucune tension n'est appliquée, et existe dans un état d'orientation torsadée lorsqu'une tension est appliquée.

12. Dispositif optique selon la revendication 1, dans lequel le substrat supérieur comprend en outre une première couche d'électrode (10b) entre la première couche de base (10a) et la couche adhésive sensible à la pression (10c), et le substrat inférieur comprend une deuxième couche d'électrode (20b) entre la deuxième couche de base (20a) et les pièces d'écartement (20c).

13. Dispositif optique selon la revendication 12, dans lequel le substrat supérieur ne comprend pas de film d'alignement (20d), et le substrat inférieur comprend en outre un film d'alignement (20d).

14. Automobile comprenant une carrosserie dans laquelle une ou plusieurs ouvertures sont formées ; et le dispositif optique selon la revendication 1 est monté dans les ouvertures.
